# EUROPEAN PATENT SPECIFICATION

(11) **EP 2 806 130 B1**
(45) Date of publication and mention of the grant of the patent: **08.03.2017**
(21) Application number: 13738747.8
(22) Date of filing: 11.01.2013
(51) Int. Cl.: F01N 3/28, B01D 53/86, B01D 53/94, F01N 3/02, F01N 13/18, F01N 13/14, F01N 13/00, F01N 3/021

(54) **EXHAUST GAS PURIFICATION DEVICE**
ABGASREINIGUNGSVORRICHTUNG
DISPOSITIF DE PURIFICATION DE GAZ D'ÉCHAPPEMENT

(30) Priority: 20.01.2012 JP 2012009816; 06.02.2012 JP 2012023096; 06.02.2012 JP 2012023097
(43) Date of publication of application: 26.11.2014
(73) Proprietor: Yanmar Co., Ltd., Osaka-shi, Osaka 530-8311 (JP)
(72) Inventor: SANDOU Yoshiyuki, Osaka-shi Osaka 530-8311 (JP); MITSUDA Masataka, Osaka-shi Osaka 530-8311 (JP)
(74) Representative: Hoffmann Eitle
(86) International application number: PCT/JP2013/050454
(87) International publication number: WO 2013/108724

(56) References cited:
- EP-A1- 2 549 075
- EP-A1- 2 799 683
- EP-A1- 2 806 142
- EP-A2- 2 345 802
- JP-A- H0 642 333
- JP-A- H10 103 255
- JP-A- 2005 194 949
- JP-A- 2006 226 237
- JP-A- 2011 163 339
- JP-A- 2011 196 194

## Description

### Technical Field

The present invention relates to an exhaust gas purification device which is mounted to a diesel engine or the like, and more particularly to an exhaust gas purification device which removes particulate matter (soot and particulate) or the like contained in exhaust gas.

### Background Art

Conventionally, there has been known a technique in which a diesel particulate filter (hereinafter, refer to as DPF) is provided as an exhaust gas purification device in an exhaust gas channel of a diesel engine (hereinafter, refer simply to as an engine) to purify exhaust gas discharged from the engine by the DPF (refer to Patent Document 1). Further, in the DPF, there has been known a technique in which an inside case is provided in an inner portion of an outside case so as to form a double structure, and an oxidation catalyst or a soot filter is embedded in the inside case (refer, for example, to Patent Document 2). Further, in the DPF, there has been also known a technique in which the case having the oxidation catalyst built-in and the case having the soot filter built-in are connected via a flange fastened by bolts in a separable manner (refer, for example, to Patent Documents 3 and 4).

Further, patent document 5 discloses an exhaust gas treatment apparatus attached by way of an exhaust pipe to an engine body, to avoid vibrational damage. The casing of the exhaust gas treatment apparatus consists of a plurality of casing units which are separable from each other. Connection flanges are disposed in respective end portions of the casing units, the casing units are coupled together by a connection of the connection flanges, and the exhaust gas treatment apparatus is supported by the engine body through the connection flanges.

### Citation List

### Patent Literature

Patent Document 1: J P 2004-263593
Patent Document 2: J P 2005-194949
Patent Document 3: J P2009-228516
Patent Document 4: JP2009-91982
Patent Document 5: EP 2 345 802 A2

### Summary of Invention

### Technical Problem

In the meantime, the applicant of the present invention has proposed a structure in which a sensor boss body for an exhaust gas pressure sensor is provided in an inner tube side of a purification casing having a double tube structure, and the sensor boss body is protruded outward from an opening hole formed in an outer tube of the purification casing, in Japanese Unexamined Patent Publication Nos. 2011-163273 and 2011-179384. According to the structure mentioned above, there is an advantage that a piping of the exhaust gas pressure sensor can be easily assembled in the purification casing via the sensor boss body while suppressing the reduction in a temperature of an exhaust gas within the inner tube on the basis of a heat insulating (hot insulation) action in the outer tube side.

In the meantime, in the case that the DPF is mounted to the engine in an assembling plant of the engine, it takes a lot of trouble for a worker with lifting up the DPF having a heavy weight and assembling the DPF in the engine, and an assembling workability can not be improved.

In the meantime, in the case of a structure in which a silencer is not attached to a downstream side (an outlet side) of the exhaust gas in the DPF, and an outlet of the exhaust gas is open to a lid body closing the downstream side of the exhaust gas, the silencer is attached to the outlet of the exhaust gas via an exhaust pipe. However, the soot filter within the DPF can be seen from the outlet of the exhaust gas by detaching the exhaust pipe. Therefore, there has been a risk that the soot filter can be easily broken if a foreign matter like a rod is inserted from the outlet of the exhaust gas, for example, for reducing pressure loss or for mischief.

The present invention intends to provide an exhaust gas purification device to which an improvement is further applied while adhering to the idea of its own prior application.

### Solution to Problem

According to a first aspect of the invention, an exhaust gas purification device according to claim 1 is provided, wherein the exhaust gas purification device in particular includes a plurality of filter bodies for purifying exhaust gas discharged by an engine, and a purification casing having each of the filter bodies built-in and being constructed by a plurality of purification cases, wherein the purification casing is constructed by arranging the purification cases in an exhaust gas moving direction and connecting the purification cases by a thick plate flange, and a suspension body is integrally formed in the thick plate flange.

According to a second aspect of the invention, in the exhaust gas purification device described in the first aspect, the suspension body is arranged in one end side in the exhaust gas moving direction of the purification casing, a suspension bracket is arranged in the other end side in the exhaust gas moving direction of the purification casing, and the suspension body and the suspension bracket are spaced in both sides in the exhaust gas moving direction and faced to each other, in such a manner that their opening holes are positioned in a direction intersecting a longitudinal axis of the exhaust gas moving direction of the purification casing.

According to a third aspect of the invention, in the exhaust gas purification device described in the second aspect, an attaching phase of the thick plate can be changed around the longitudinal axis of the exhaust gas moving direction of the purification casing.

According to a fourth aspect of the invention, the exhaust gas purification device described in any one of the first to third aspects further includes an exhaust gas pressure sensor for detecting exhaust gas pressure within the purification casing, wherein the exhaust gas pressure sensor is connected to the purification casing via an exhaust gas pressure sensor pipe, a rotation stop body is provided in a fastening boss body which exists in one end side of the exhaust gas pressure sensor pipe, and the fastening boss body is fastened by locking the rotation stop body to the purification casing.

According to a fifth aspect of the invention, in the exhaust gas purification device described in the fourth aspect, each of the purification cases is constructed as a double tube structure by a plurality of inside cases which have each of the filter bodies built-in, and a plurality of outside cases which accommodate the respective inside cases, a pressure boss body is attached to the inside case, the pressure boss body protrudes outward from an opening hole which is formed in the outside case, and the rotation stop body is locked to the opening hole of the outside case in fastening of the fastening boss body of the exhaust gas pressure sensor pipe to the pressure boss body.

According to a sixth aspect of the invention, in the exhaust gas purification device described in the fifth aspect, the purification casing has a purification inlet pipe and a purification outlet pipe, and the purification inlet pipe is constructed as a double tube structure.

According to a seventh aspect of the invention, in the exhaust gas purification device described in the sixth aspect, the purification outlet pipe passes through the purification casing, and an end portion in a closed side of the purification outlet pipe is constructed as a double wall structure.

According to the invention, an exhaust gas outlet is open to a lid body which closes an exhaust gas downstream side of the purification casing, and a baffle plate is provided on an inner surface side of the lid body, the baffle plate inhibiting foreign matter from being inserted into an inner portion of the purification casing.

### Advantageous Effect of Invention

According to the present invention, in the exhaust gas purification device including a plurality of filter bodies which purify the exhaust gas discharged by the engine, and the purification casing which has each of the filter bodies built-in and is constructed by a plurality of purification cases, the purification casing is constructed by arranging each of the purification cases in the exhaust gas moving direction and connecting the purification cases by the thick plate flange, and the suspension body is integrally formed in the thick plate flange. As a result, the purification casing can be assembled in the engine by locking the suspension body and the suspension bracket, for example, to a hook (not shown) of a chain block, and moving up and down the purification casing by the chain block, for example, in an assembling plant of the engine. In other words, the purification casing (the exhaust gas purification device) can be smoothly mounted to the engine by using the suspension body and the suspension bracket without lifting up the purification casing (the exhaust gas purification device) by his or her own ability of the worker.

According to the second aspect of the invention, the suspension body is arranged in one end side in the exhaust gas moving direction of the purification casing, the suspension bracket is arranged in the other end side in the exhaust gas moving direction of the purification casing, and the suspension body and the suspension bracket are spaced in both sides in the exhaust gas moving direction and faced to each other, in such a manner that the their opening holes are positioned in the direction intersecting the longitudinal axis of the exhaust gas moving direction of the purification casing. As a result, the purification casing which is a heavy load can be suspended in a stable attitude, on the basis of a positional relationship in a diagonal direction between the suspension body and the suspension bracket. For example, it is possible to easily align a DPF attaching portion of a flywheel housing, with a connecting leg body and a fixing leg body which are provided in the exhaust gas purification device side. Therefore, it is possible to improve an assembling workability of the exhaust gas purification device.

According to the third aspect of the invention, the attaching phase of the thick plate flange can be changed around the longitudinal axis of the exhaust gas moving direction of the purification casing. As a result, the position of the suspension body can be easily changed, for example, in relation to a connecting direction of the purification inlet pipe or the purification outlet pipe (an attaching specification of the exhaust gas purification device to the engine), without changing a shape of the thick plate flange (a forming position of the suspension body), thereby contributing to further improvement of the assembling workability of the exhaust gas purification device.

According to the fourth and fifth aspects of the invention, the exhaust gas purification device further includes the exhaust gas pressure sensor which detects the exhaust gas pressure within the purification casing, the exhaust gas pressure sensor is connected to the purification casing via the exhaust gas pressure sensor pipe, the rotation stop body is provided in the fastening boss body which exists in one end side of the exhaust gas pressure sensor pipe, and the fastening boss body is fastened by locking the rotation stop body to the purification casing. Therefore, the fastening boss body can be fastened to the purification casing only by screwing the fastening boss body until the rotation stop body is locked to the purification casing. As a result, the exhaust gas pressure sensor pipe can be fixed to the purification casing in a state in which the exhaust gas pressure sensor pipe is necessarily maintained in a predetermined attitude, and it is possible to significantly improve the assembling workability of the exhaust gas pressure sensor pipe.

According to the sixth aspect of the invention, each of the purification cases is constructed by a plurality of inside cases which have each of the filter bodies built-in, and a plurality of outside cases which accommodate the respective inside cases, and the purification inlet pipe is constructed as the double tube structure. As a result, a heat insulating performance can be improved not only in the purification casing but also in the purification inlet pipe. Accordingly, it is possible to inhibit the temperature of the exhaust gas from being lowered within the purification casing. Further, deterioration of heat balance can be suppressed by preventing the temperature from rising within an arrangement space (for example, a hood of a working machine) of the engine.

According to the seventh aspect of the invention, the purification outlet pipe passes through the purification casing, and the end portion in the closed side of the purification outlet pipe is constructed as the double wall structure. As a result, the heat insulating performance can be improved not only in the purification casing and the purification inlet pipe but also in the purification outlet pipe. Therefore, it is possible to further inhibit the temperature of the exhaust gas from being lowered within the purification casing. Further, the deterioration of the heat balance can be more securely suppressed by preventing the temperature rise within the arrangement space (for example, the hood of the working machine) of the engine.

According to the eighth aspect of the invention, the exhaust gas outlet is open to the lid body which closes the exhaust gas downstream side of the purification casing, and the baffle plate is provided on the inner surface side of the lid body, the baffle plate inhibiting foreign matter from being inserted into the inner portion of the purification casing. As a result, the exhaust gas outlet can be covered by the baffle plate from the inner side even if the exhaust pipe communicating with the exhaust gas outlet is detached. It is possible to inhibit the foreign matter from being inserted into the inner portion of the purification casing thanks to the existence of the baffle plate. Therefore, it is possible to prevent the filter body within the purification casing from being broken by inserting the foreign matter like the rod from the exhaust gas outlet, for example, for reducing the pressure loss or for mischief.

### Brief Description of Drawings

Fig. 1 is a perspective view of an engine as seen from an obliquely forward side;
Fig. 2 is a left side elevational view of the engine;
Fig. 3 is a right side elevational view of the engine;
Fig. 4 is a plan view of the engine;
Fig. 5 is a front elevational view of the engine;
Fig. 6 is a back elevational view of the engine;
Fig. 7 is a perspective view of an outer appearance of a DPF as seen from a purification inlet pipe side;
Fig. 8 is a perspective view of the outer appearance of the DPF as seen from a purification outlet pipe side;
Fig. 9 is an explanatory view of a cross section of the DPF;
Fig. 10 is a separated side elevational view of a pinching flange;
Fig. 11 is a perspective view of the outer appearance of the DPF and shows a positional relationship between a suspension body and a suspension bracket;
Fig. 12 is a bottom elevational view of the DPF;
Fig. 13 is a perspective view of the outer appearance of the DPF in a state in which a connection flange body is separated;
Fig. 14 is an enlarged cross sectional view of a purification inlet pipe;
Fig. 15 is an enlarged view of a substantial part of an exhaust gas purification device;
Fig. 16 is a perspective view of the engine as seen from an obliquely forward side;
Fig. 17 is a left side elevational view of the engine;
Fig. 18 is a right side elevational view of the engine;
Fig. 19 is a plan view of the engine;
Fig. 20 is a front elevational view of the engine;
Fig. 21 is a back elevational view of the engine;
Fig. 22 is an explanatory view of a cross section of the exhaust gas purification device;
Fig. 23 is a perspective view of a lid body as seen from an inner surface side; and

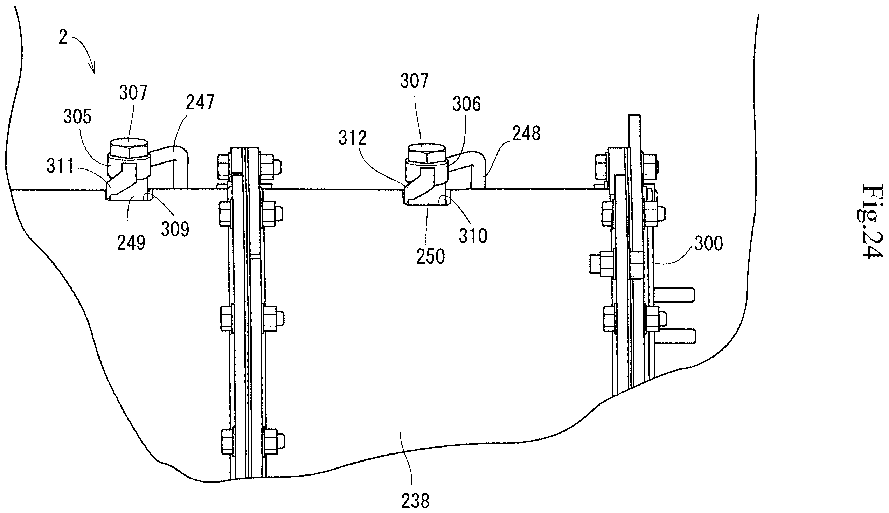

Fig. 24 is an enlarged view of a substantial part of the exhaust gas purification device.

### Description of Embodiments

A description will be given below of an embodiment obtained by specifying the present invention with reference to the accompanying drawings.

### (1) Outline structure of engine

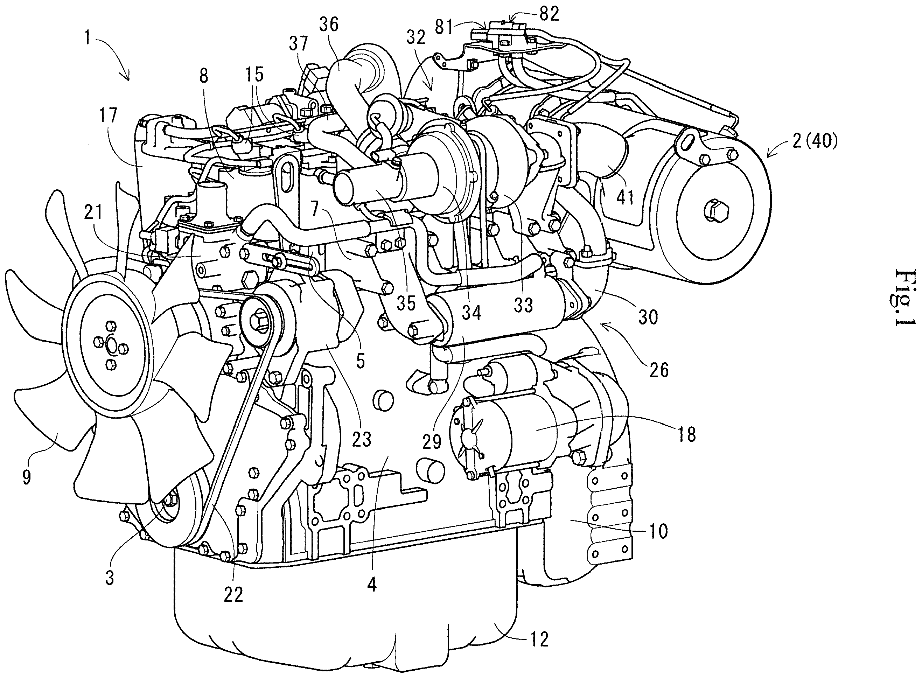

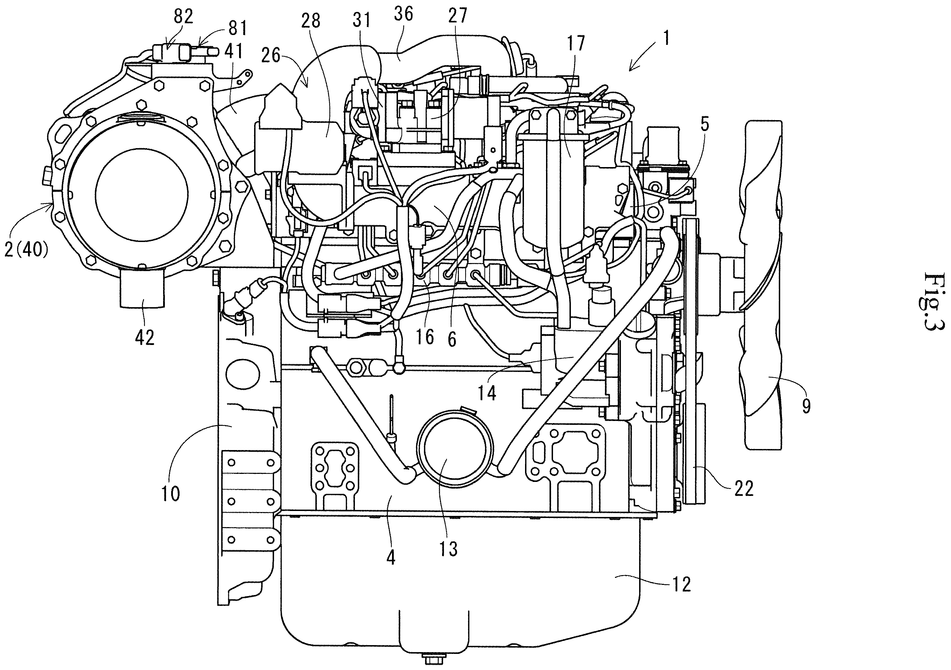

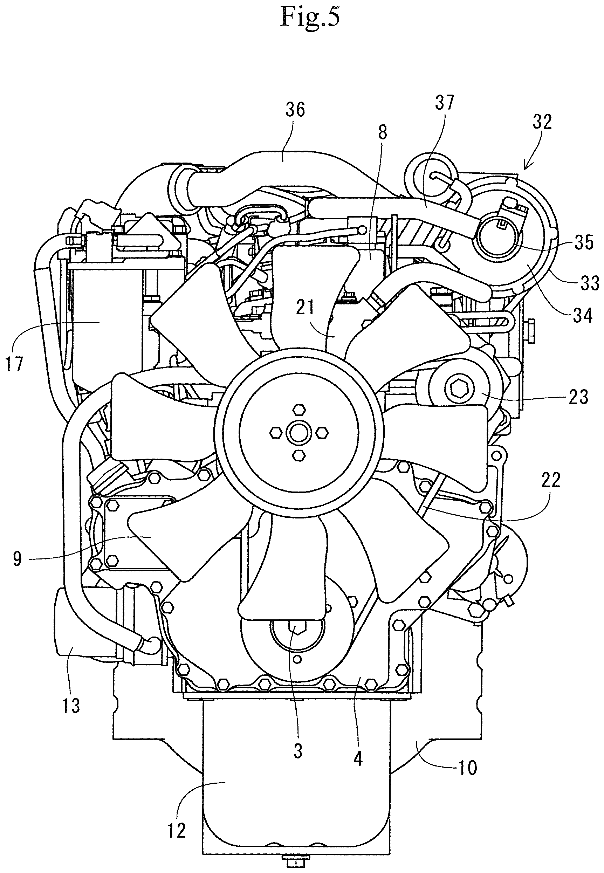

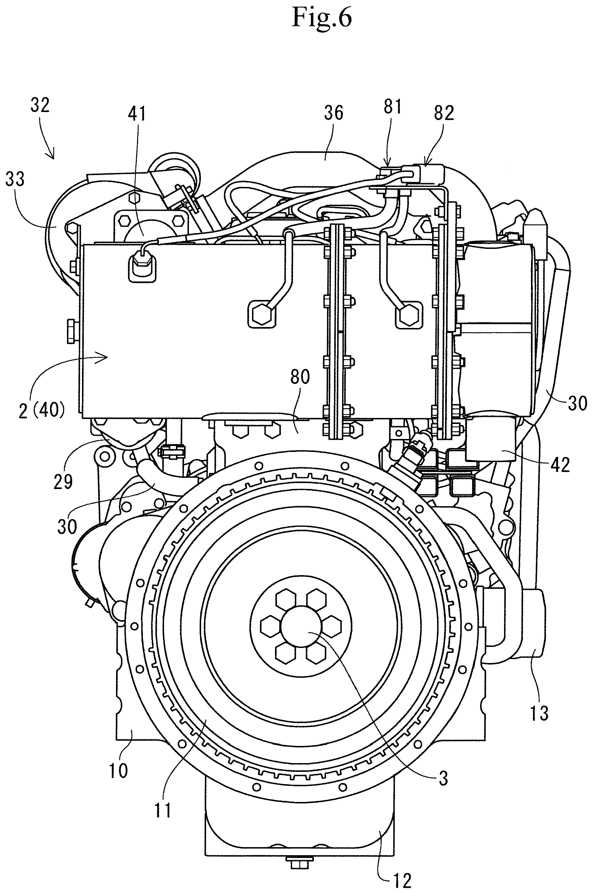

First of all, a description will be given of an outline structure of a common rail type engine 1 with reference to Figs. 1 to 6. In the following description, both side portions which are parallel to a crank axis (both side portions in relation to the crank axis) are called as right and left sides, a side in which a cooling fan 9 is arranged is called as a front side, a side in which a flywheel housing 10 is arranged is called as a rear side, a side in which an exhaust manifold 7 is arranged is called as a left side, and a side in which an intake manifold 6 is arranged is called as a right side. They are set to reference in positional relationship of four directions, and up and down in the engine 1, as a matter of convenience.

As shown in Figs. 1 to 6, the engine 1 serving as a prime mover mounted to a working machine such as an agricultural machine or a construction and a civil engineering machine is provided with a continuous regeneration type exhaust gas purification device 2 (a diesel particulate filter, hereinafter refer to as DPF). Particulate matter (PM) in exhaust gas discharged from the engine 1 is removed, and carbon monoxide (CO) and hydrocarbon (HC) in the exhaust gas are reduced, by PDF 2.

The engine 1 is provided with a cylinder block 4 which has a crank shaft 3 corresponding to an engine output shaft and a piston (not shown) built-in. A cylinder head 5 is mounted onto the cylinder block 4. An intake manifold 6 is arranged on a right side surface of the cylinder head 5, and an exhaust manifold 7 is arranged on a left side surface of the cylinder head 5. An upper surface side of the cylinder head 5 is covered by a head cover 8. Both front and rear end sides of the crank shaft 3 are protruded out of both front and rear side surfaces of the cylinder block 4. A cooling fan 9 is provided in a front surface side of the engine 1. Rotary power is transmitted to the cooling fan 9 from a front end side of the crank shaft 3 via a V belt 22 for cooling fan.

A flywheel housing 10 is provided in a rear surface side of the engine 1. A flywheel 11 is accommodated within the flywheel housing 10 in a state in which the flywheel 11 is axially supported to a rear end side of the crank shaft 3. The rotary power of the engine 1 is transmitted to an actuation part of the working machine from the crank shaft 3 via the flywheel 11. An oil pan 12 is arranged on a lower surface of the cylinder block 4, the oil pan 12 storing lubricating oil. The lubricating oil within the oil pan 12 is supplied to each of lubricating parts of the engine 1 via an oil filter 13 which is arranged on the right side surface of the cylinder block 4, and is thereafter returned to the oil pan 12.

A fuel supply pump 14 is provided above the oil filter 13 (below the intake manifold 6) on the right side surface of the cylinder block 4. Further, the engine 1 is provided with injectors 15 for four cylinders, the injector 15 having an electromagnetic switch control type fuel injection valve (not shown). Each of the injector 15 is connected to a fuel tank (not shown) which is mounted to the working machine, via the fuel supply pump 14, a cylindrical common rail 16 (an accumulator), and a fuel filter 17. The fuel of the fuel tank is pressure fed to the common rail 16 from the fuel supply pump 14 via the fuel filter 17, and the high-pressure fuel is accumulated in the common rail 16. The high-pressure fuel within the common rail 16 is injected to each of the cylinders of the engine 1 from each of the injectors 15, by controlling to open and close the fuel injection valve of each of the injectors 15. The flywheel housing 10 is provided with a starter 18 for starting the engine.

A cooling water pump 21 for lubricating cooling water is arranged in the front surface side of the cylinder block 4 so as to be coaxial with a fan axis of the cooling fan 9. The cooling water pump 21 is driven together with the cooling fan 9 via the V belt 22 for the cooling fan on the basis of the rotary power of the crank shaft 3. The cooling water within a radiator (not shown) mounted to the working machine is supplied to the cylinder block 4 and the cylinder head 5 on the basis of the driving of the cooling water pump 21, and cools the engine 1. The cooling water contributing to the cooling of the engine 1 is returned to the radiator. An alternator 23 is arranged on a left side of the cooling water pump 21.

An engine leg attaching portion 24 is provided on each of right and left side surfaces of the cylinder block 4. An engine leg body (not shown) having a vibration isolating rubber is fastened by bolts to each of the engine leg attaching portions 24. The engine 1 is supported in a vibration isolating manner to the working machine (specifically an engine attaching chassis) via each of the engine leg bodies.

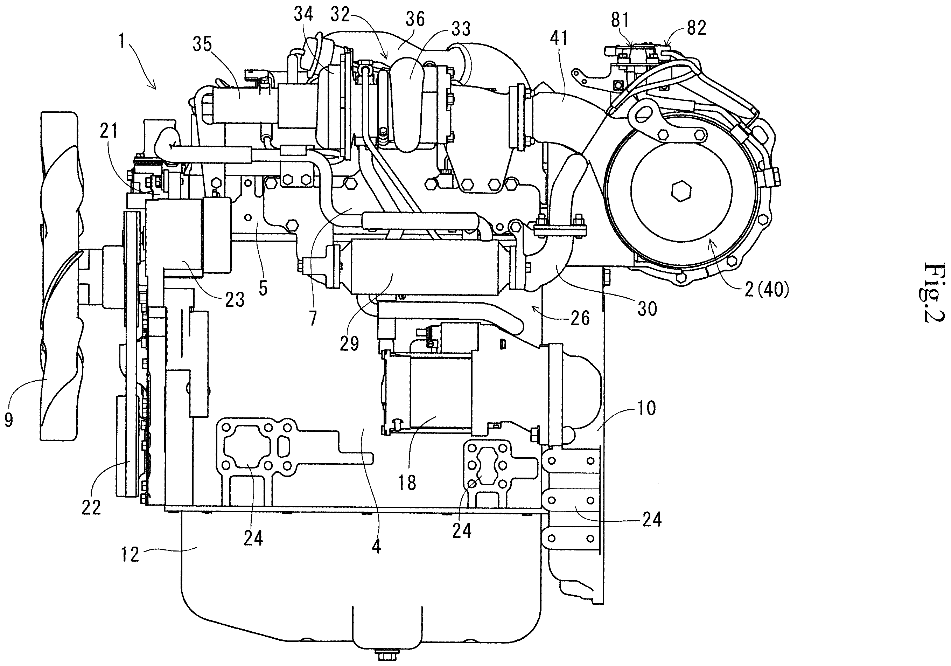

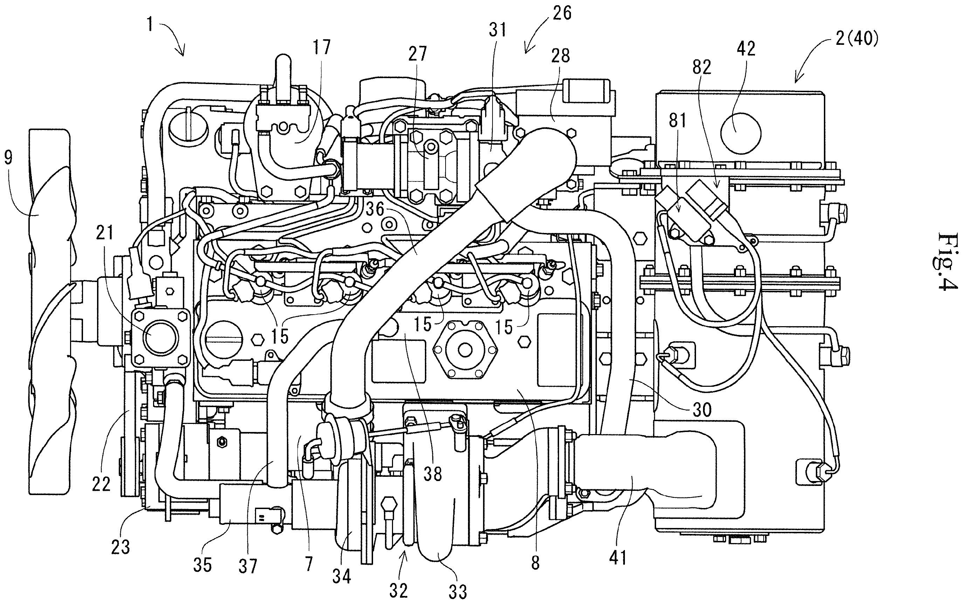

As shown in Figs. 2 and 4, an inlet portion of the intake manifold 6 is connected to an air cleaner (not shown) via an EGR device 26 (an exhaust gas recirculation device). Fresh air (external air) sucked into the air cleaner is dust collected and purified, is thereafter fed to the intake manifold 6 via the EGR device 26, and is supplied to each of the cylinders of the engine 1.

The EGR device 26 is provided with an EGR main body case 27 (collector) which mixes a part of the exhaust gas of the engine 1 (the EGR gas from the exhaust manifold 7) and the fresh air (the external air from the air cleaner) so as to supply to the intake manifold 6, an intake throttle member 28 which communicates the EGR main body case 27 with the air cleaner, a recirculation exhaust gas pipe 30 which is connected to the exhaust manifold 7 via an EGR cooler 29, and an EGR valve member 31 which communicates the EGR main body case 27 with the recirculation exhaust gas pipe 30.

The intake throttle member 28 is connected to the intake manifold 6 via the EGR main body case 27. The intake throttle member 28 is fastened by bolts to one end portion in a longitudinal direction of the EGR main body case 27. A laterally inward opening end portion of the EGR main body case 27 is fastened by bolts to an inlet portion of the intake manifold 6. An outlet side of the recirculation exhaust gas pipe 30 is connected to the EGR main body case 27 via the EGR valve member 31. An inlet side of the recirculation exhaust gas pipe 30 is connected to a lower surface side of the exhaust manifold 7 via the EGR cooler 29. A supply amount of the EGR gas to the EGR main body case 27 is adjusted by adjusting an opening degree of an EGR valve (not shown) within the EGR valve member 31.

In the structure mentioned above, the fresh air (the external air) is supplied into the EGR main body case 27 from the air cleaner via the intake throttle member 28. On the other hand, the EGR gas (a part of the exhaust gas discharged out of the exhaust manifold 7) is supplied into the EGR main body case 27 from the exhaust manifold 7 via the EGR valve member 31. After the fresh air from the air cleaner is mixed with the EGR gas from the exhaust manifold 7 within the EGR main body case 27, the mixed gas within the EGR main body case 27 is supplied to the intake manifold 6. As mentioned above, by refluxing a part of the exhaust gas discharged out of the exhaust manifold 7 to the engine 1 via the intake manifold 6, a maximum combustion temperature is lowered at the operating time under a high load, and a discharge amount of NOx (nitrogen oxide) from the engine 1 is reduced.

As shown in Figs. 1 to 5, a turbo supercharger 32 is arranged on a right side of the cylinder head 5 and above the exhaust manifold 7. The turbo supercharger 32 is provided with a turbine case 33 which has a turbine wheel (not shown) built-in, and a compressor case 34 which has a blower wheel (not shown) built-in. An inlet side of the exhaust gas in the turbine case 33 is connected to an outlet portion of the exhaust manifold 7. An outlet side of the exhaust gas in the turbine case 33 is connected to a tail pipe (not shown) via the DPF 2. The exhaust gas discharged out of each of the cylinders of the engine 1 to the exhaust manifold 7 is discharged to the exterior from the tail pipe via the turbine case 33 of the turbo supercharger 32 and the DPF 2.

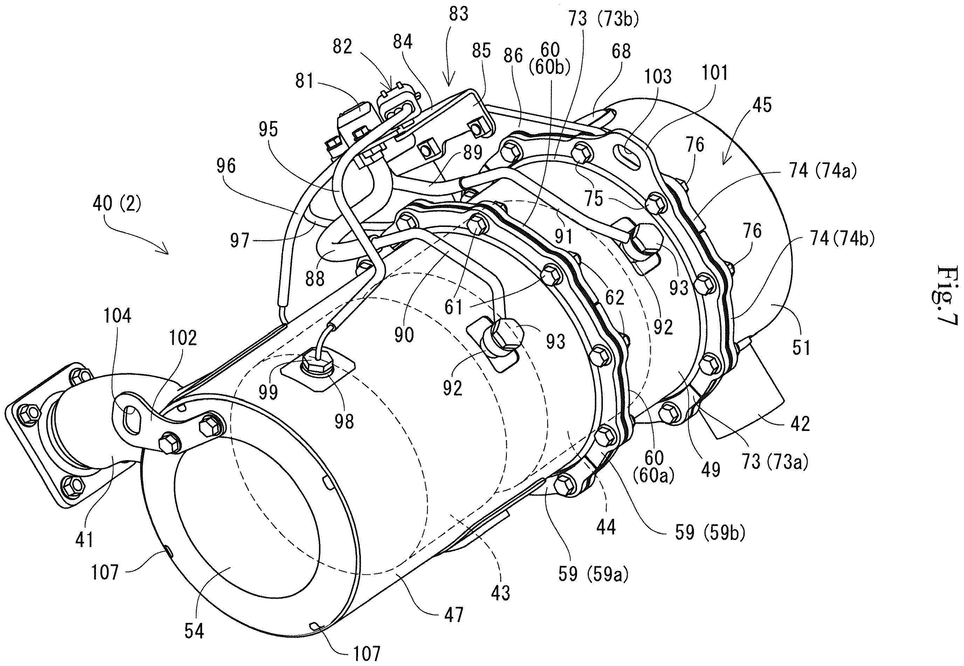

An inlet side of the intake air in the compressor case 34 is connected to the air cleaner via an intake pipe 35. An outlet side of the intake air in the compressor case 34 is connected to the intake throttle member 28 via a supercharging pipe 36. The fresh air dust collected by the air cleaner is fed to the intake manifold 6 from the compressor case 34 via the intake throttle member 28 and the EGR main body case 27, and is supplied to each of the cylinders of the engine 1. The intake pipe 35 is connected to a breather chamber 38 within the head cover 8 via a blow-by gas return pipe 37 (refer to Fig. 7). The blow-by gas after lubricating oil separated and removed by the breather chamber 38 is returned to the intake pipe 35 through the blow-by gas return pipe 37, and is refluxed to the intake manifold 6 so as to be resupplied to each of the cylinders of the engine 1.

### (2) Outline structure of DPF

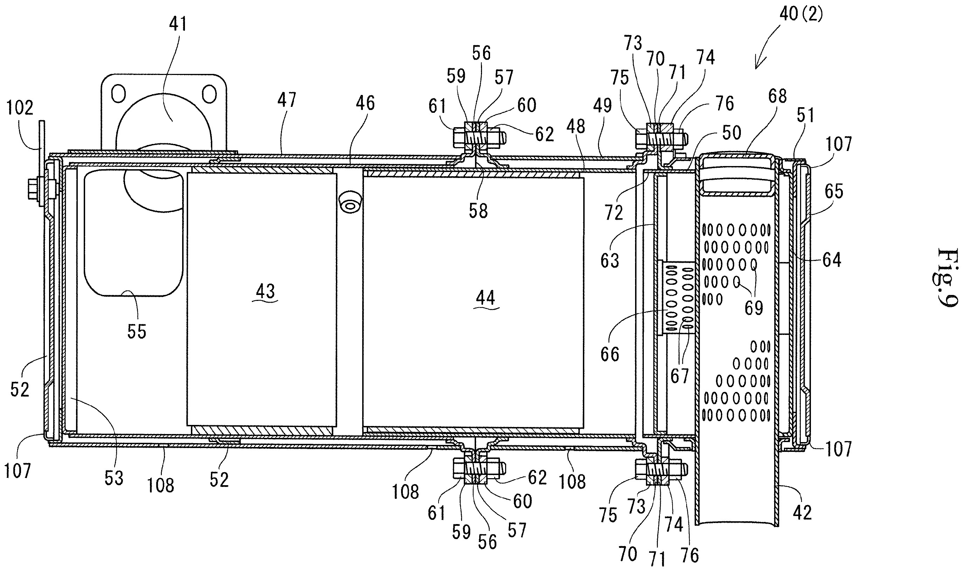

A description will be given of an outline structure of the DPF 2 with reference to Figs. 7 to 10. The DPF 2 is provided with a purification casing 40 which has a purification inlet pipe 41 and a purification outlet pipe 42 and is made of a heat resisting metal material. A diesel oxidation catalyst 43 and a soot filter 44 are accommodated inside the purification casing 40 so as to be lined up in series in a moving direction of the exhaust gas (refer to a direction of an arrow in Fig. 9), the diesel oxidation catalyst 43 creating nitrogen dioxide (NO₂) and made of platinum, and the soot filter 44 continuously oxidizing and removing collected particulate matter (PM) at a comparatively low temperature and having a honeycomb structure. The purification inlet pipe 41 and the purification outlet pipe 42 are provided in a sorted manner on both sides (one end side and the other end side) in a longitudinal direction of the purification casing 40. The purification inlet pipe 41 is connected to an exhaust gas outlet side of the turbine case 33. The purification outlet pipe 42 is connected to a tail pipe (not shown).

In the structure mentioned above, the exhaust gas of the engine 1 flows into the purification casing 40 from the exhaust gas outlet side of the turbine case 33 via the purification inlet pipe 41, and passes through the diesel oxidation catalyst 43 and the soot filter 44 in this order so as to be purified. The particulate matter in the exhaust gas can not run through a porous partition wall between cells in the soot filter 44 and is collected. Thereafter, the exhaust gas passing through the diesel oxidation catalyst 43 and the soot filter 44 is discharged toward the tail pipe.

If the temperature of the exhaust gas is beyond a regenerative temperature (for example, about 300°C) when the exhaust gas passes through the diesel oxidation catalyst 43 and the soot filter 44, nitrogen monoxide (NO) in the exhaust gas is oxidized into the unstable nitrogen dioxide on the basis of the action of the diesel oxidation catalyst 43. Further, the oxygen (O) which the nitrogen dioxide discharges when returning to the nitrogen monoxide oxidizes and removes the particulate matter which is piled up in the soot filter 44, whereby a particulate matter collecting capacity of the soot filter 44 is recovered (the soot filter 44 is self regenerated).

In the embodiment, the other end side in the longitudinal direction of the purification casing 40 is constructed as a silencer 45, and the purification outlet pipe 42 is provided in the silencer 45. The diesel oxidation catalyst 43 and the soot filter 44 correspond to filter bodies for purifying the exhaust gas.

The purification casing 40 is provided with a catalyst inside case 46 and a catalyst outside case 47, a filter inside case 48 and a filter outside case 49, and a silencer inside case 50 and a silencer outside case 51. Combinations of the respective inside cases 46, 48 and 50 and the respective outside cases 47, 49 and 51 are constructed as double tube structures. The diesel oxidation catalyst 43 is accommodated within the catalyst inside case 46. The soot filter 44 is accommodated within the filter inside case 48. A support body 52 of a thin plate having an L-shaped cross section is arranged between an outer peripheral side of the catalyst inside case 46 and an inner peripheral side of the catalyst outside case 47. The outer peripheral side of the catalyst inside case 46 is connected to the inner peripheral side of the catalyst outside case 47 via the thin plate support body 52.

Combinations of the respective inside cases 46 and 48 and the respective outside cases 47 and 49 correspond to purification cases which are constructing elements of the purification casing 40. The DPF 2 of the embodiment is provided with the silencer 45, however, the silencer 45 itself is not an essential constructing element of the DPF 2. In other words, the silencer inside case 50 and the silencer outside case 51 are not the essential constructing elements of the purification casing 40.

A catalyst inner lid body 53 is fixed by welding to one end side (an end portion in an upstream side of the exhaust gas) of the catalyst inside case 46 and the catalyst outside case 47. The catalyst inside case 46 and the catalyst outside case 47 are closed their one sides with the catalyst inner lid body 53. A catalyst outer lid body 54 is fixed by welding to an outer end surface side of the catalyst inner lid body 53, the catalyst outer lid body 54 covering the catalyst inner lid body 53 from an outer side. The purification inlet pipe 41 is fixed by welding to an outer peripheral side of the catalyst outside case 47. The purification inlet pipe 41 is communicated within the catalyst inside case 46 via an exhaust gas inlet 55 which is formed in the catalyst inside case 46 and the catalyst outside case 47.

Catalyst flanges 56 are fixed by welding to the other end side (an end portion in an exhaust gas downstream side) of the catalyst inside case 46, the catalyst flange 56 protruding to an outer peripheral side (a radially outer side) of the catalyst outside case 47 and being formed into a thin plate. The other end side of the catalyst outside case 47 is fixed by welding to an outer peripheral side of the catalyst flange 56. On the other hand, a filter inlet flange 57 is fixed by welding to a longitudinal midstream portion in an outer peripheral side of the filter inside case 48, the filter inlet flange 57 protruding to an outer peripheral side of the filter outside case 49 and being formed into a thin plate. One end side (an end portion in an exhaust gas upstream side) of the filter outside case 49 is fixed by welding to an outer peripheral side of the filter inlet flange 57.

As shown in Figs. 7 to 9, the catalyst outside case 47 and the filter outside case 49 are connected by facing the catalyst flange 56 and the filter inlet flange 57 via the gasket 58, pinching both the flanges 56 and 57 from both sides in the exhaust gas moving direction by center pinching flanges 59 and 60 of thick plates which surround outer peripheral sides of the respective outside cases 47 and 49, and fastening both the center pinching flanges 59 and 60 together with both the flanges 56 and 57 by bolts 61 and nuts 62. In a state in which the catalyst outside case 47 and the filter outside case 49 are connected, one end side of the filter inside case 46 overlaps (are inserted) into an inner portion from the other end sides of the catalyst inside case 46 and the catalyst outside case 47.

The silencer 45 positioned in the other end side in the longitudinal direction of the purification casing 40 is provided with the silencer inside case 50 and the silencer outside case 51 which form the double tube structure. A partition lid body 63 is fixed by welding to one end side (an end portion in the exhaust gas upstream side) of the silencer inside case 50. One end side of the silencer inside case 50 is closed with the partition lid body 63. A silencer inner lid body 64 is fixed by welding to the other end side (an end portion in the exhaust gas downstream side) of the silencer inside case 50 and the silencer outside case 51. A silencer outer lid body 65 is fixed by welding to an outer end surface side of the silencer inner lid body 64, the silencer outer lid body 65 covering the silencer inner lid body 64 from an outer side.

A pair of communication pipes 66 are provided between the partition lid body 63 and the silencer inner lid body 64 (only one is shown in Fig. 9). One end sides of both the communication pipes 66 pass through the partition lid body 63. The other end sides of both the communication pipes 66 are closed with the silencer inner lid body 64. A lot of communication holes 67 are formed in each of the communication pipes 66. An inner portion of the silencer inside case 50 partitioned by the partition lid body 63 and the silencer inner lid body 64 is constructed as a sound box which is communicated with both the communication pipes 66 via the communication holes 67.

The purification outlet pipe 42 is passed through the silencer inside case 50 and the silencer outside case 51, the purification outlet pipe 42 passing between both the communication pipes 66. A pair of outlet lid bodies 68 are fixed by welding to one end side (an upper end side) of the purification outlet pipe 42. One end side of the purification outlet pipe 42 is closed with both the outlet lid bodies 68. Both the outlet lid bodies 68 are arranged so as to be spaced up and down at appropriate distances. A lot of exhaust holes 69 are formed in a portion within the silencer inside case 50 in the purification outlet pipe 42. Therefore, both the communication pipes 66 within the silencer inside case 50 are communicated with the purification outlet pipe 42 via the communication holes 67, the sound box and the exhaust holes 69. The other end (a downstream end side) of the purification outlet pipe 42 is connected, for example, to the tail pipe or an existing sound absorbing member. In the structure mentioned above, the exhaust gas entering into both the communication pipes 66 of the silencer inside case 46 passes through the purification outlet pipe 42 via the communication holes 67, the sound box and the exhaust holes 69 and is discharged out of the silencer 45.

Filter outlet flanges 70 are fixed by welding to the other end side of the filter inside case 48, the filter outlet flange 70 protruding to an outer peripheral side of the filter outside case 49 and formed into a thin plate. The other end side of the filter outside case 49 is fixed by welding to an outer peripheral side of the filter outlet flange 70. On the other hand, silencer flanges 71 are fixed by welding to one end side of the silencer inside case 50, the silencer flange 71 protruding to an outer peripheral side of the silencer outside case 51 and formed into a thin plate. One end side of the silencer outside case 51 is fixed by welding to an outer peripheral side of the silencer flange 71.

As shown in Figs. 7 to 9, the filter outside case 49 is connected to the silencer outside case 51 by facing the filter outlet flanges 70 and the silencer flanges 71 via a gasket 72, pinching both the flanges 70 and 71 from both sides in the exhaust gas moving direction by outlet pinching flanges 73 and 74 which surround the outer peripheral sides of the respective outside cases 49 and 51 and are formed into thick plates, and fastening both the outlet pinching flanges 73 and 74 together with both the flanges 70 and 71 by bolts 75 and nuts 76.

Each of the center pinching flanges 59 (60) is constructed by circular arc bodies 59a and 59b (60a and 60b) which are separated into a plurality of pieces in a peripheral direction of the corresponding outside case 47 (49). Each of the circular arc bodies 59a and 59b (60a and 60b) is formed into a circular arc shape (approximately semicircular horseshoe shape). In a state in which the catalyst outside case 47 is connected to the filter outside case 49, end portions of both the circular arc bodies 59a and 59b (60a and 60b) are faced to each other in the peripheral direction so as to be joined, and surround the outer peripheral side of the catalyst outside case 47 (the filter outside case 49). Here, the confronting portions between the end portions of the catalyst side circular arc bodies 59a and 59b and the filter inlet side circular arc bodies 60a and 60b are arranged at positions where their phases are shifted (the confronting portions are not overlapped in the same phase). The respective circular arc bodies 59a, 59b, 60a and 60b constructing the center pinching flanges 59 and 60 are all in the same form.

Each of the outlet pinching flanges 73 (74) is constructed by circular arc bodies 73a and 73b (74a and 74b) which are separated into a plurality of pieces in a peripheral direction of the corresponding outside case 49 (51) in the same manner as the center pinching flanges 59 and 60. Each of the circular arc bodies 73a and 73b (74a and 74b) has basically the same shape as that of each of the circular arc bodies 59a and 59b (60a and 60b) of the center pinching flange 59 (60). The confronting portions between the end portions of the filter outlet side circular arc bodies 73a and 73b and the sound absorbing side circular arc bodies 74a and 74b are also arranged at positions where their phases are shifted.

A connection leg body 77 is detachably mounted to at least one of the pinching flanges 59, 60, 73 and 74, the connecting leg body 77 supporting the purification casing 40 to the engine 1. In the embodiment, a leg body fastening portion 78 with through holes is formed in the one circular arc body 73a in the outlet pinching flange 73. An attaching boss portion corresponding to the leg body fastening portion 78 of the circular arc body 73a is formed in the connecting leg body 77. The connecting leg body 77 is detachably mounted to the outlet pinching flange 73 in the filter outlet side by fastening by bolts the attaching boss portion of the connecting leg body 77 to the leg body fastening portion 78 of the circular arc body 73a. A fixing leg body 79 is firmly fixed by welding to the outer peripheral side of the purification casing 40 (the catalyst outside case 47 in the embodiment), the fixing leg body 79 supporting the purification casing 40 to the engine 1. The connecting leg body 77 and the fixing leg body 79 are fastened by bolts to a DPF attaching portion 80 which is formed in an upper surface side of the flywheel housing 10. In other words, the DPF 2 is stably connected and supported onto the flywheel housing 10 by the connecting leg body 77 and the fixing leg body 79, the flywheel housing 10 being a member having a high rigidity.

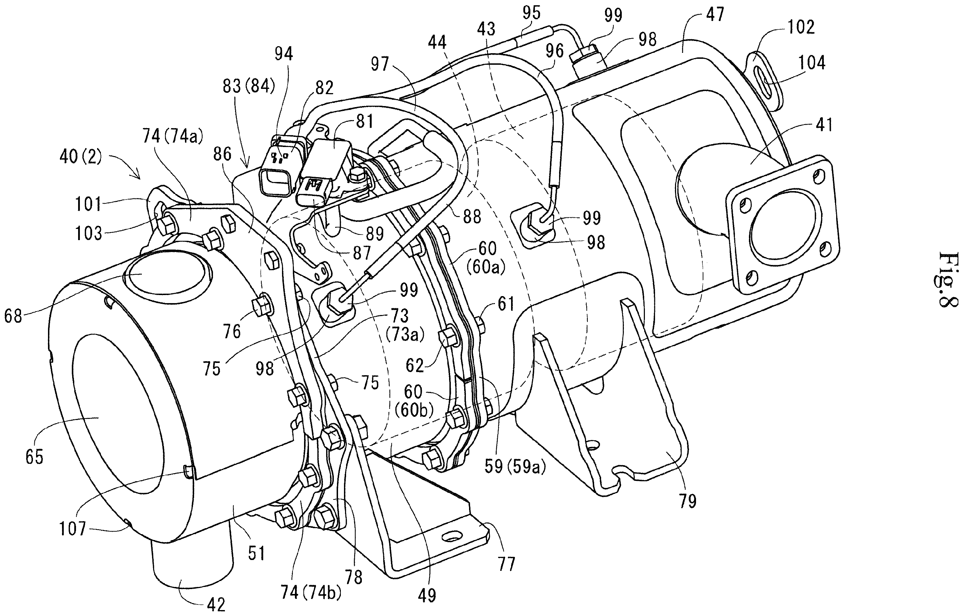

As shown in Figs. 7 and 8, an exhaust gas pressure sensor 81 and an exhaust gas temperature sensor 82 are provided in an outer peripheral side of the purification casing 41, the exhaust gas pressure sensor 81 detecting the exhaust gas pressure within the purification casing 40, and the exhaust gas temperature sensor 82 detecting the exhaust gas temperature within the purification casing 40 in the same manner. The exhaust gas pressure sensor 81 is structured such as to detect pressure difference of the exhaust gas between the exhaust gas upstream side and the exhaust gas downstream side in relation to the soot filter 44. An amount of sedimentation of the particulate matter in the soot filter 44 is converted on the basis of the pressure difference, and a clogged state within the DPF 2 is comprehended.

A sensor bracket 83 is detachably mounted to at least one of the pinching flanges 59, 60, 73 and 74, the sensor bracket 83 of L-shaped plate supporting the exhaust gas pressure sensor 81 and the exhaust gas temperature sensor 82 and being formed into an approximately L-shaped plate. In the embodiment, a sensor support portion 86 with through holes is formed in one circular arc body 74a in the outlet pinching flange 74 in the sound absorbing side. In other words, the sensor support portion 86 is formed in a part of the outlet pinching flange 74 in the sound absorbing side which is the furthest from the exhaust gas inlet 55 side. The sensor bracket 83 is detachably mounted to the outlet pinching flange 74 on the sound absorbing side, by fastening by bolts a vertical plate portion 85 of the sensor bracket 83 to the sensor support portion 86 of the circular arc body 43a.

As shown in Figs. 7, 8 and 10, the sensor support portion 86 of the circular arc body 74a protrudes to an outer peripheral side (radially outer side) of the purification casing 40. As a result, a horizontal plate portion 84 of the sensor bracket 83 is away from the outer peripheral side of the purification casing 40. The exhaust gas pressure sensor 81 and the exhaust gas temperature sensor 82 are provided side by side on the horizontal plate portion 84 of the sensor bracket 83. The horizontal plate portion 84 of the sensor bracket 83 is positioned in an outer peripheral side of the filter outside case 49 in such a manner that both the sensors 81 and 82 are fit within a length range in the exhaust gas moving direction of the purification casing 40. In the case that the attaching structure mentioned above is employed, it is possible to fit both the sensors 81 and 82 within the length range in the exhaust gas moving direction of the purification casing 40 even in the case that the silencer 45 is not directly attached to the DPF 2.

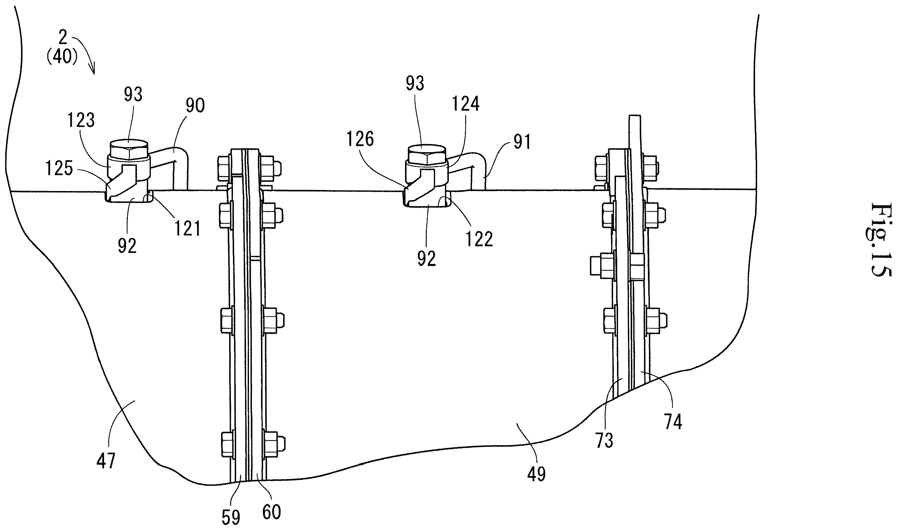

A pressure wiring connector 87 is integrally provided in the exhaust gas pressure sensor 81. Base end sides of upstream and downstream pipe joint bodies 90 and 91 are connected to the exhaust gas pressure sensor 81 via upstream and downstream sensor pipings 88 and 89 respectively. As has been already mentioned, the purification casing 40 of the embodiment is constructed as the double tube structure (refer to Fig. 9). A pressure boss body 92 is firmly fixed by welding to the catalyst inside case 46 and the filter inside case 48 (the inner tube side of the purification casing 40) according to such a positional relationship as to pinch the soot filter 44. As in detail shown in Fig. 15, outward protruding end sides of the respective pressure boss bodies 92 protrude radially outward from opening holes 121 and 122 which are formed in the corresponding outside cases 47 and 49 (the outer tube side of the purification casing 40) (refer to Fig. 15). Fastening boss bodies 123 and 124 provided in leading end sides of the respective tube joint bodies 90 and 91 are fastened to the respective corresponding pressure boss bodies 92 via pipe joint bolts 93. Combination of the upstream and downstream sensor pipings 88 and 89 and the upstream and downstream pipe joint bodies 90 and 91 corresponds to an exhaust gas pressure sensor pipe which connects the purification casing 40 and the exhaust gas pressure sensor 81.

Hook-like rotation stop bodies 125 and 126 are provided in the fastening boss bodies 123 and 124 of the respective pipe joint bodies 90 and 91. When the fastening boss bodies 123 and 124 are fastened to the respective boss bodies 92 via the pipe joint bolts 93, the fastening boss bodies 123 and 124 are screwed into the pressure boss bodies 92 until the rotation stop bodies 125 and 126 are locked to edge portions of the opening holes 121 and 122 of the purification casing 40 (the outside cases 47 and 49). As a result, the fastening boss bodies 123 and 124 can be fixed to the pressure boss bodies 92 in the same attitude that each of the pipe joint bodies 90 and 91 necessarily extend to the sensor bracket 83 (further to the exhaust gas pressure sensor 81). Therefore, it is possible to dramatically improve an assembling workability of each of the pipe joint bodies 90 and 91.

The exhaust gas temperature sensor 82 is provided with a temperature wiring connector 94 on the horizontal plate portion 84 of the sensor bracket 83. Three sensor pipings 95 to 97 extend from the exhaust gas temperature sensor 82 (which may be called as the temperature wiring connector 94). A temperature boss body 98 is firmly fixed by welding to the catalyst inside case 46 and the filter inside case 48. Two temperature boss bodies 98 are provided in the catalyst inside case 46, and one temperature boss body 98 is provided in the filter inside case 48. An outward protruding end side of each of the temperature boss bodies 98 protrudes radially outward from an opening which is formed in the corresponding outside case 47 or 49. Detection portions in leading ends of the sensor pipings 95 to 97 extending from the exhaust gas temperature sensor 82 are passed through installation bolts 99 which are threadably engaged with the respective temperature boss bodies 98, and detection portions in leading ends of the sensor pipings 95 to 97 are fixed to the temperature boss bodies 98 via the installation bolts 99. The detection portions in the leading ends of the respective sensor pipings 95 to 97 protrude into between the catalyst inner lid body 53 and the diesel oxidation catalyst 43, between the diesel oxidation catalyst 43 and the soot filter 44, and between the soot filter 44 and the partition lid body 63, respectively.

In the embodiment, the exhaust gas pressure sensor 81 and the exhaust gas temperature sensor 82 are fixed onto the horizontal plate portion 84 of the sensor bracket 83 in a state in which the connecting directions of the pressure wiring connector 87 and the temperature wiring connector 94 are directed to the same direction. As a result, it is possible to improve a workability of connecting the wiring to each of the connectors 87 and 94.

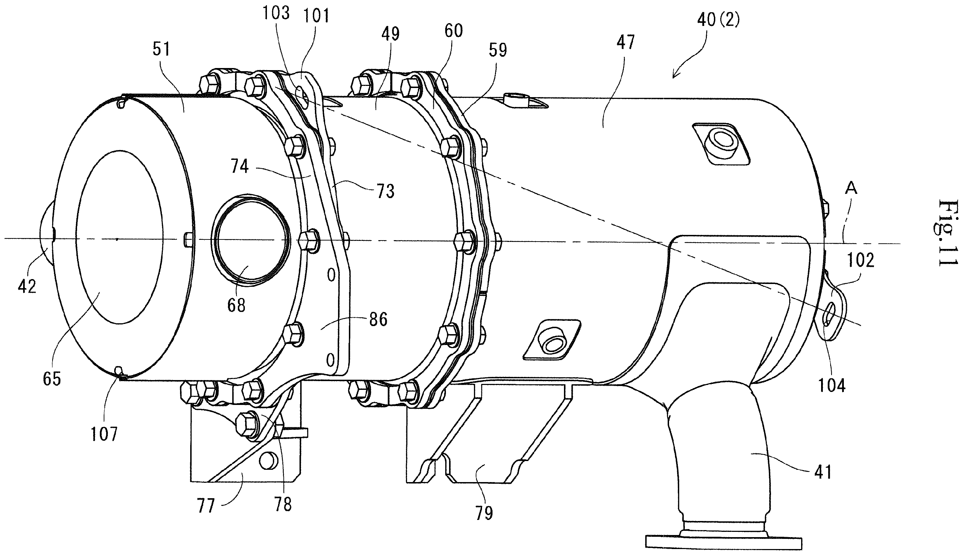

Further, in the embodiment, a suspension body 101 is integrally formed in the other circular arc body 73b in the outlet pinching flange 73 in the filter outlet side, and a suspension bracket 102 is fastened by bolts to the catalyst outer lid body 54 of the purification casing 40. The suspension body 101 and the suspension bracket 102 are faced to each other so as to be spaced on both sides in the exhaust gas moving direction in such a manner that the their opening holes 103 and 104 are positioned in the diagonal direction of the purification casing 40 (the direction intersecting the longitudinal axis A) (refer to Fig. 11). Not only the outlet pinching flange 73 in the filter outlet side, but also the other pinching flanges 59, 60 and 74 correspond to the thick plate flange for connecting the purification case. In other words, the suspension body 101 may be integrally formed in the other pinching flanges 59, 60 and 74.

According to the structure mentioned above, the purification casing 40 can be assembled in the engine 1 by locking the suspension body 101 and the suspension bracket 102, for example, to a hook (not shown) of a chain block and moving up and down the purification casing 40 by the chain block, in an assembling plant of the engine 1. In other words, the purification casing 40 can be smoothly mounted to the engine 1 by using the suspension body 101 and the suspension bracket 102 without the worker lifting up the purification casing 40 by his or her own power.

Further, it is possible to suspend the purification casing 40 which is a heavy load under a stable attitude, according to the positional relationship in the diagonal direction between the suspension body 101 and the suspension bracket 102. Thus it is possible, for example, to easily carry out alignment between the DPF attaching portion 80 of the flywheel housing 10, and the connecting leg body 77 and the fixing leg body 79. Therefore, it is possible to improve an assembling workability of the DPF 2.

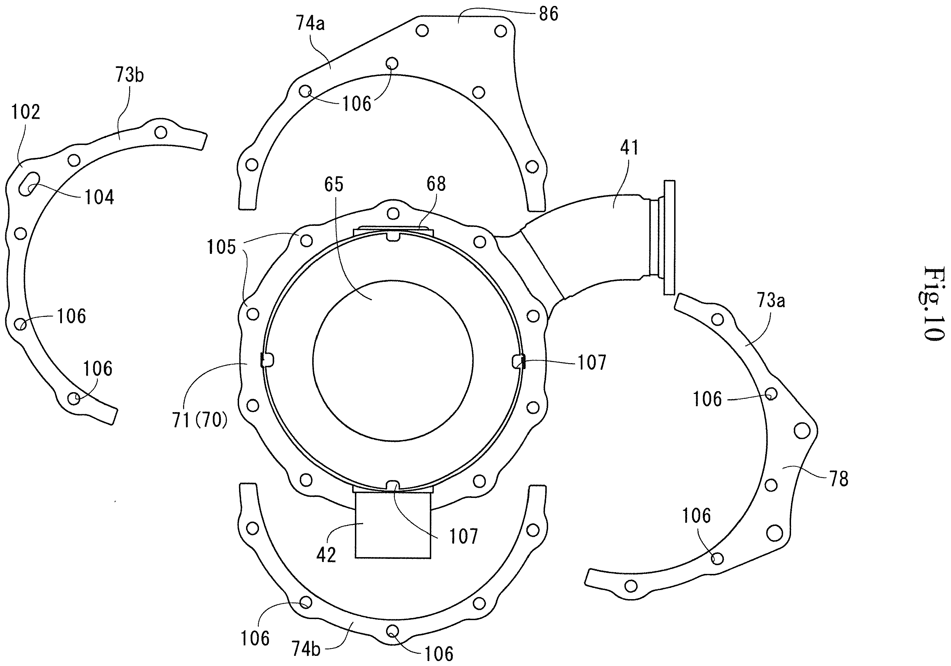

In the meantime, a plurality of bolt fastening portions 105 with through holes are provided at uniform distances along the peripheral direction in each of the pinching flanges 59, 60, 73 and 74 corresponding to the thick plate flange, as shown in Fig. 10. In the embodiment, the bolt fastening portions 105 are provided at ten positions every one set of pinching flanges 59, 60, 73 and 74. In view of unit of each of the circular arc bodies 59a, 59b, 60a, 60b, 73a, 73b, 74a and 74b, the bolt fastening portions 105 are provided at five positions at the uniform distances along the peripheral direction. A bolt hole 106 corresponding to each of the bolt fastening portions 105 of the pinching flanges 59, 60, 73 and 74 is formed in each of the flanges 56, 57, 70 and 71. As a result, attaching phases of the circular arc body group 59a, 59b, 60a, 60b, 73a, 73b, 74a and 74b of the respective pinching flanges 59, 60, 73 and 74 can be changed in multiple stages around the longitudinal axis A in the exhaust gas moving direction of the purification casing 40 (along the peripheral direction of the purification casing 40).

According to the structure mentioned above, it is possible to easily change the position of the suspension body 101 in relation to the connecting direction of the purification inlet pipe 41 and the purification outlet pipe 42 (the attaching specification of the DPF 2 in relation to the engine 1) without changing the shape of each of the pinching flanges 59, 60, 73 and 74 (the forming position of the suspension body 101), and it is possible to contribute to further improvement of the assembling workability of the DPF 2.

As in detail shown in Fig. 9, the lid body closing both end portions in the exhaust gas moving direction of the purification casing 40 is constructed as the double structure of the inner lid bodies 53 and 64 and the outer lid bodies 54 and 65. Further, first drain holes 107 are formed at a position which is positioned at least in a lower portion in the outer lid bodies 54 and 65 in a state in which the purification casing 40 is mounted to the engine 1, the first drain holes 107 discharging the water stored between the inner lid bodies 53 and 64 and the outer lid bodies 54 and 65 (refer to Figs. 7 to 11). The outer lid bodies 54 and 65 are formed into the same approximately disc-like shape. The first drain holes 107 are formed in a peripheral edge portion in a radial direction on the basis of a center line (the longitudinal axis A) in the exhaust gas moving direction in each of the outer lid bodies 54 and 65. The first drain holes 107 of the embodiment are open to the peripheral edge portions in a cross direction as seen from the center line (the longitudinal axis A) in the exhaust gas moving direction (the first drain holes 107 are open at four positions in relation to one outer lid body 54 and 65). The portion between the inner lid bodies 53 and 64 and the outer lid bodies 54 and 65 is communicated to the exterior via the first drain holes 107.

According to the structure mentioned above, in spite of the structure in which the heat insulating performance is secured by closing both the end portions in the exhaust gas moving direction of the purification casing 40 with the double structures of the inner lid bodies 53 and 64 and the outer lid bodies 54 and 65, it is possible to discharge the water stored between the inner lid bodies 53 and 64 and the outer lid bodies 54 and 65 due to dew condensation or rain water, from the first drain holes 107, and a draining performance of the DPF 2 becomes better. As a result, corrosion resistance of the DPF 2 is improved. In addition, since both the end portions in the exhaust gas moving direction of the purification casing 40 are closed with the outer lid bodies 54 and 65 having the same shape, it is possible to reduce a number of the constructing parts so as to contribute to cost reduction. It is possible to easily change the attaching direction around the center line (the longitudinal axis A) of the outer lid bodies 54 and 65 in relation to each of the end portions in the exhaust gas moving direction of the purification casing 40, without changing a shape of the outer lid bodies 54 and 65. Further, it is possible to enhance a degree of freedom of the attaching direction of the outside case (for example, the catalyst outside case 47 and the silencer outside case 51) in relation to the engine 1.

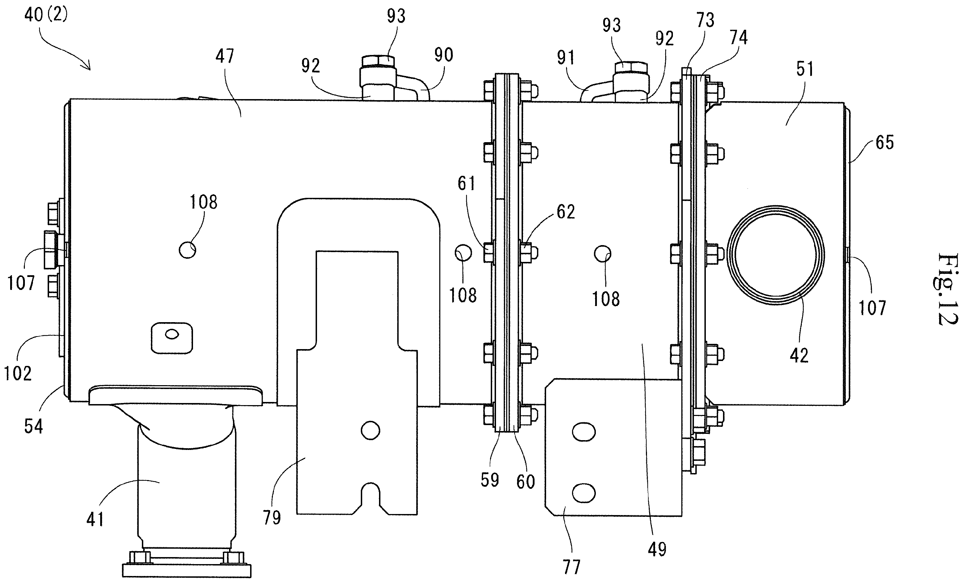

As shown in Fig. 12, second drain holes 108 are formed at a position which is positioned at least in a lower portion in each of the outside cases 47 and 49 in a state in which the purification casing 40 is mounted to the engine 1, the second drain holes 108 discharging the water stored between the inside cases 46 and 48 and the outside cases 47 and 49. In the embodiment, the second drain holes 108 are formed at three positions including both sides in relation to the fixing leg body 79 in the catalyst outside case 47 and the filter outside case 49. According to the structure mentioned above, in spite of the structure in which the heat insulating performance is secured by constructing the purification casing 40 as the double structures of the inside cases 46 and 48 and the outside cases 47 and 49, it is possible to discharge the water stored between the inside cases 46 and 48 and the outside cases 47 and 49 due to the dew condensation and the rain water, from the second drain holes 108, and the draining performance of the DPF 2 becomes better. As a result, it is possible to contribute to further improvement of the corrosion resistance of the DPF 2.

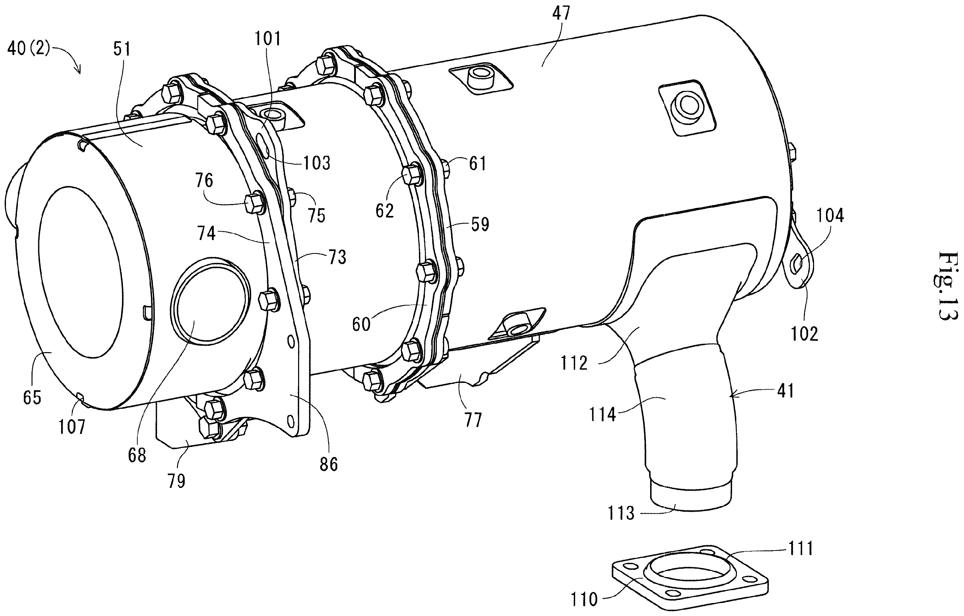

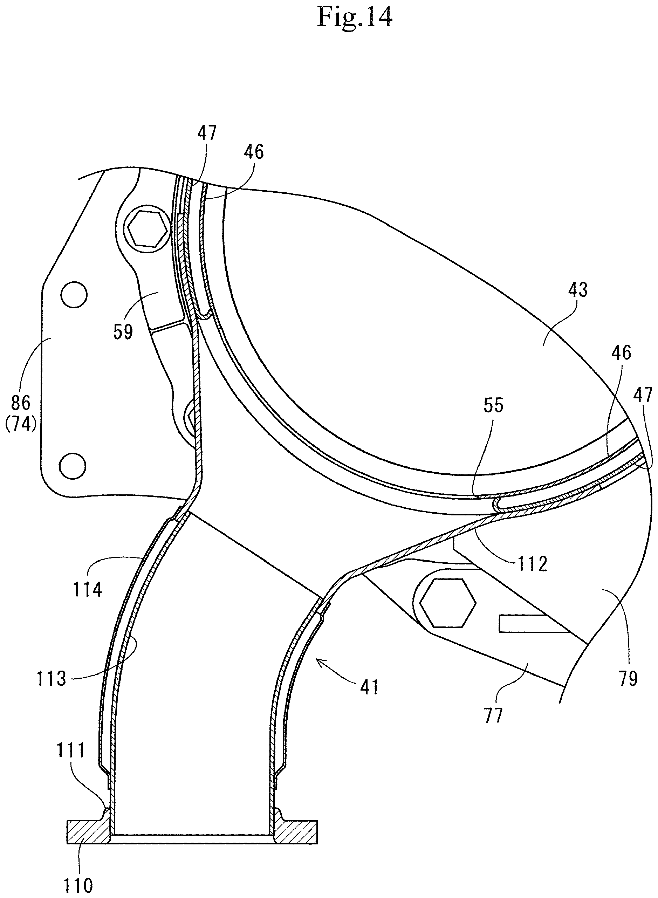

As shown in Figs. 13 and 14, a connection flange body 110 is firmly fixed by welding to a leading end side of the purification inlet pipe 41 which is provided in an outer peripheral side of the catalyst outside case 47, the connection flange body 110 being fastened to the exhaust outlet side of the turbine case 33. An annular projection portion 111 is integrally formed in the connection flange body 110 by protruding an opening edge portion formed in the center in a direction of the purification inlet pipe 41. The annular projection portion 111 of the connection flange body 110 is welded to a leading end outer peripheral side of the purification inlet pipe 41 by inserting the purification inlet pipe 41 to an opening portion in the center of the connection flange body 110.

According to the structure mentioned above, the weld portion to the leading end outer peripheral side of the purification inlet pipe 41 is spaced from a flat portion of the connection flange body 110. As a result, in spite of the structure in which the connection flange body 110 is firmly fixed to the purification inlet pipe 41 by welding, an adverse effect caused by high heat generated in the welding is hard to be applied to the connection flange body 110, and it is possible to maintain a flatness of the flat portion of the connection flange body 110. Therefore, it is possible to suppress a risk that the stress causing the breakage of the DPF 2 is locally generated in the connection flange body 110.

As shown in Figs. 13 and 14, the purification inlet pipe 41 is constructed as the double tube structure. The purification inlet pipe 41 of the embodiment is constructed by a funnel-like portion 112 which fans out and covers the exhaust gas inlet 55 formed in the catalyst outside case 47 from an outer side, an inner tube portion 113 which is inserted and fixed to a leading end opening portion of the funnel-like portion 112, and an outer tube portion 114 which is fitted to the inner tube portion 113. A base end side of the funnel-like portion 112 is fixed by welding to an outer peripheral side of the catalyst outside case 47. An overlapping position between a leading end side of the funnel like portion 112 to which the inner tube portion 113 is inserted, and a base end side of the outer tube portion 114 is fixed by welding. A leading end side of the outer tube portion 114 is fixed by welding to the inner tube portion 113. A leading end side of the inner tube portion 113 protrudes out of the outer tube portion 114, and the connection flange body 110 is fixed by welding to the portion. According to the structure mentioned above, the heat insulating performance is improved not only in the purification casing 40 but also in the purification inlet pipe 41. Therefore, it is possible to suppress temperature drop of the exhaust gas within the purification casing 40. Further, it is possible to suppress heat balance deterioration by preventing temperature rise within the arranging space of the engine 1 (for example, the hood of the working machine).

As shown in Fig. 9, the purification outlet pipe 42 passes through the purification casing 40. In the embodiment, the purification outlet pipe 42 passes through the silencer inside case 50 and the silencer outside case 51. One end side (an upper end side) which is an end portion in a closed side of the purification outlet pipe 42 is constructed as a double wall structure. In this case, a pair of outlet lid bodies 68 are fixed by welding to one end side of the purification outlet pipe 42, and one end side of the purification outlet pipe 42 is closed with both the outlet lid bodies 68. Both the outlet lid bodies 68 are arranged so as to be appropriately spaced up and down. An air layer between both the outlet lid bodies 68 contributes as a heat insulating layer. According to the structure mentioned above, the heat insulating performance is improved not only in the purification casing 40 and the purification inlet pipe 41, but also in the purification outlet pipe 42. Therefore, it is possible to further suppress the temperature drop of the exhaust gas within the purification casing 40. Further, it is possible to more securely suppress the heat balance deterioration by preventing the temperature rise within the arranging space of the engine 1 (for example, the hood of the working machine).

### (3) Summary

As is apparent from the structure mentioned above, in the exhaust gas purification device 2 having a plurality of filter bodies 43 and 44 which purify the exhaust gas discharged by the engine 1, the purification casing 40 which has each of the filter bodies 43 and 44 built-in and is constructed by a plurality of purification cases 46 to 49, the exhaust gas pressure sensor 81 which detects the exhaust gas pressure within the purification casing 40, and the exhaust gas temperature sensor 82 which detects the exhaust gas temperature within the purification casing 40, both the sensors 81 and 82 are arranged in the outer peripheral side of the purification casing 40 in such a manner that both the sensors 81 and 82 are fitted within the length range in the exhaust gas moving direction of the purification casing 40. As a result, it is not necessary to evaluate whether or not an initial setting (adjustment) of each of the sensors 81 and 82 is proper for every specification of the engine 1 or every working machine, and it is possible to reduce an evaluating man hour for design and test. It is possible to achieve standardization of the constructing parts which are relevant to the exhaust gas purification device 2. Since the attaching positions of both the sensors 81 and 82 are fitted within the length range in the exhaust gas moving direction of the purification casing 40, it is possible to eliminate the influence of both the sensors 81 and 82 to a total length in the exhaust gas moving direction of the purification casing 40 (the exhaust gas purification device 2). As a result, it is possible to compactly arrange the exhaust gas purification device 2 including both the sensors 81 and 82 within the arranging space of the engine 1.

Further, the sensor bracket 83 is detachably mounted to the sensor support portion 86 which is provided in a part of the flanges 59, 60, 73 and 74 of the purification cases 46 to 49 group, and both the sensors 81 and 82 are provided in the sensor bracket 83. As a result, it is possible to reduce vibration transmitting to both the sensors 81 and 82, by supporting both the sensors 81 and 82 by the flanges 59, 60, 73 and 74 having a high rigidity. Therefore, it is possible to suppress an adverse effect to a detection precision of both the sensors 81 and 82. It is also possible to prevent both the sensors 81 and 82 from falling away.

Further, the sensor support portion 86 is formed in a part of the flange 74 which is the furthest from the exhaust gas inlet 55 side in the purification cases 46 to 49 group, the horizontal plate portion 84 of the sensor bracket 83 is positioned away from the outer peripheral side of the purification casing 40, and both the sensors 81 and 82 are provided side by side on the horizontal plate portion 84. As a result, the heat generated by the exhaust gas purification device 2 is hard to be transmitted to both the sensors 81 and 82. Accordingly, in spite of the structure in which both the sensors 81 and 82 are assembled in the exhaust gas purification device 2, it is possible to suppress malfunction of both the sensors 81 and 82 due to overheat. In addition, since the exhaust gas purification device 2 is close to both the sensors 81 and 82, it is possible to shorten the length of each of the sensor pipings 88, 89 and 95 to 97 connecting the exhaust gas purification device 2 and both the sensors 81 and 82, and it is possible to achieve improvement of the assembling workability and cost reduction.

As is apparent from the above description and Figs. 7, 8 and 11, in the exhaust gas purification device 2 having a plurality of filter bodies 43 and 44 which purify the exhaust gas discharged by the engine 1, and the purification casing 40 which has each of the filter bodies 43 and 44 built-in and is constructed by a plurality of purification cases 47, 49 and 51, the purification casing 40 is constructed by arranging each of the purification cases 47, 49 and 51 in the exhaust gas moving direction and connecting the purification cases 47, 49 and 51 by the thick plate flanges 59, 60, 73 and 74, and the suspension body 101 is integrally formed in the thick plate flange 73. As a result, the purification casing 40 can be assembled in the engine 1, for example, by locking the suspension body 101 and the suspension bracket 102 to the hook (not shown) of the chain block, and moving up and down the purification casing 40 by the chain block, for example, in the assembling plant of the engine 1. In other words, the purification casing 40 can be smoothly mounted to the engine 1 by using the suspension body 101 and the suspension bracket 102 without the worker lifting up the purification casing 40 by his or her own power.

As is apparent from the above description and Fig. 11, the suspension body 101 is arranged on one end side in the exhaust gas moving direction of the purification casing 40, the suspension bracket 102 is arranged, on the other hand, on the other end side in the exhaust gas moving direction of the purification casing 40, and the suspension body 101 and the suspension bracket 102 are spaced and faced to each other on both sides in the exhaust gas moving direction in such a manner that the their opening holes 103 and 104 are positioned in the direction intersecting the longitudinal axis A in the exhaust gas moving direction of the purification casing 40. As a result, it is possible to suspend the purification casing 40 which is the heavy load in the stable attitude according to the positional relationship in the diagonal direction of the suspension body 101 and the suspension bracket 102. For example, it is possible to easily carry out the alignment between the DPF attaching portion 80 of the flywheel housing 10, and the connecting leg body 77 and the fixing leg body 79. Therefore, it is possible to improve the assembling workability of the DPF 2.

As is apparent from the above description and Figs. 10 and 11, the attaching angles of the thick plate flanges 59, 60, 73 and 74 can be changed around the longitudinal axis A in the exhaust gas moving direction of the purification casing 40. As a result, it is possible to easily change the position of the suspension body 101 in relation to the connecting direction of the purification inlet pipe 41 and the purification outlet pipe 42 (the attaching specification of the exhaust gas purification device 2 in relation to the engine 1) without changing the shapes of the thick plate flanges 59, 60, 73 and 74 (the forming position of the suspension body 101), and it is possible to contribute to the further improvement of the assembling workability of the exhaust gas purification device 2.

As is apparent from the above description and Figs. 7 to 12, in the exhaust gas purification device having a plurality of filter bodies 43 and 44 which purify the exhaust gas discharged by the engine 1, a plurality of inside cases 46, 48 and 50 which have each of the filter bodies 43 and 44 built-in, and a plurality of outside cases 47, 49 and 51 which have the respective inside cases 46, 48 and 50 built-in, and constructing the purification casing 40 by arranging each of the outside cases 47, 49 and 51 in the exhaust gas moving direction and connecting the outside cases 47, 49 and 51, the lid body closing both the end portions in the exhaust gas moving direction of the purification casing 40 is constructed as the double structure of the inner lid bodies 53 and 64 and the outer lid bodies 54 and 65, and the first drain hole 107 is formed at least at the lower position in the outer lid bodies 54 and 65 in the state in which the purification casing 40 is mounted to the engine 1, the first drain hole 107 discharging the water stored between the inner lid bodies 53 and 64 and the outer lid bodies 54 and 56. As a result, in spite of the structure in which the heat insulating performance is secured by closing both the end portions in the exhaust gas moving direction of the purification casing 40 by the double structures of the inner lid bodies 53 and 64 and the outer lid bodies 54 and 65, it is possible to discharge the water stored between the inner lid bodies 53 and 64 and the outer lid bodies 54 and 65 due to the dew condensation or the rain water, from the first drain hole 107, and the draining performance of the exhaust gas purification device 2 becomes better. Accordingly, the corrosion resistance of the exhaust gas purification device 2 is improved.

Further, the first drain hole 107 is formed at the position in the radial direction on the basis of the center line (the longitudinal axis A) in the exhaust gas moving direction in the outer lid bodies 54 and 65. As a result, it is possible to close both the end portions in the exhaust gas moving direction of the purification casing 40 with the outer lid bodies 54 and 65 having the same shape. Therefore, it is possible to contribute to the cost reduction by reducing the number of the constructing parts. Further, it is possible to easily change the attaching directions around the center axis (the longitudinal axis A) of the outer lid bodies 54 and 65 in relation to each of the end portions in the exhaust gas moving direction of the purification casing 40 without changing the shapes of the outer lid bodies 54 and 65. Further, it is possible to enhance the degree of freedom of attaching direction of the outside case (for example, the catalyst outside case 47 and the silencer outside case 51) in relation to the engine 1.

Further, the second drain hole 108 is formed at least at the lower position in each of the outside cases 47 and 49 in the state in which the purification casing 40 is mounted to the engine 1, the second drain hole 108 discharging the water stored between the inside cases 46 and 48 and the outside cases 47 and 49. As a result, in spite of the structure in which the heat insulating performance is secured by constructing the purification casing 40 as the double structures of the inside cases 46 and 48 and the outside cases 47 and 49, it is possible to discharge the water stored between the inside cases 46 and 48 and the outside cases 47 and 49 due to the dew condensation or the rain water, from the second drain hole 108, and the draining performance of the exhaust gas purification device 2 becomes better. Accordingly, it is possible to contribute to the further improvement of the corrosion resistance of the exhaust gas purification device 2.

As is apparent from the above description and Figs. 13 and 14, in the exhaust gas purification device 2 having a plurality of filter bodies 43 and 44 which purify the exhaust gas discharged by the engine 1, and the purification casing 40 which has each of the filter bodies 43 and 44 built-in and is constructed by a plurality of purification cases 46 to 51, and having the purification inlet pipe 41 and the purification outlet pipe 42 in the purification casing 40, the annular projection portion 111 is formed in the connection flange body 110 by protruding the opening edge portion of the connection flange body 110 attached to the purification inlet pipe 41 in the direction of the purification inlet pipe 41, and the annular projection portion 111 of the connection flange body 110 is fixed by welding to the purification inlet pipe 41. As a result, the weld portion to the leading end outer peripheral side of the purification inlet pipe 41 is spaced from the flat portion of the connection flange body 110. Therefore, in spite of the structure in which the connection flange body 110 is firmly fixed by welding to the purification inlet pipe 41, the adverse effect caused by the high heat by the welding is less likely to be applied to the connection flange body 110, and it is possible to maintain the flatness of the flat portion of the connection flange body 110. Therefore, it is possible to suppress the risk that the stress causing the breakage of the exhaust gas purification device 2 is locally generated in the connection flange body 110.

As is apparent from the above description and Fig. 15, in the exhaust gas purification device 2 having a plurality of filter bodies 43 and 44 which purify the exhaust gas discharged by the engine 1, the purification casing 40 which has each of the filter bodies 43 and 44 built-in and is constructed by a plurality of purification cases 46 to 51, and the exhaust gas pressure sensor 81 which detects the exhaust gas pressure within the purification casing 40, and structured such that the exhaust gas pressure sensor 81 is connected to the purification casing 40 via the exhaust gas pressure sensor pipes 88 to 91, the rotation stop bodies 125 and 126 are provided in the fastening boss bodies 123 and 124 in the one end sides of the exhaust gas pressure sensor pipes 88 to 91, and the fastening boss bodies 123 and 124 are fastened by locking the rotation stop bodies 125 and 126 to the purification casing 40. As a result, the fastening boss bodies 123 and 124 can be fastened to the purification casing 40 only by screwing the fastening boss bodies 123 and 124 until the rotation stop bodies 125 and 126 are locked to the purification casing 40. As a result, the exhaust gas pressure sensor pipes 88 to 91 can be fixed to the purification casing 40 as necessarily maintained in the predetermined attitude, and it is possible to dramatically improve the assembling workability of the exhaust gas pressure sensor pipes 88 to 91.

As is apparent from the above description and Figs. 13 to 14, the respective purification cases 46 to 51 are constructed by a plurality of inside cases 46, 48 and 50 which have each of the filter bodies 43 and 44 built-in, and a plurality of outside cases 47, 49 and 51 which accommodates the respective inside cases 46, 48 and 50, and the purification inlet pipe 41 is constructed as the double tube structure. As a result, the heat insulating performance is improved not only in the purification casing 40 but also in the purification inlet pipe 41. Therefore, it is possible to suppress the temperature drop of the exhaust gas within the purification casing 40. Further, it is possible to suppress the heat balance deterioration by preventing the temperature rise within the arranging space of the engine 1 (for example, the hood of the working machine).

As is shown in the above description and Fig. 9, the purification outlet pipe 42 passes through the purification casing 40, and the end portion on the closed side of the purification outlet pipe 40 is constructed as the double wall structure. As a result, the heat insulating performance is improved not only in the purification casing 40 and the purification inlet pipe 41 but also in the purification outlet pipe 42. Therefore, it is possible to further suppress the temperature drop of the exhaust gas within the purification casing 40. Further, it is possible to more securely suppress the heat balance deterioration by preventing the temperature rise within the arranging space of the engine 1 (for example, the hood of the working machine).

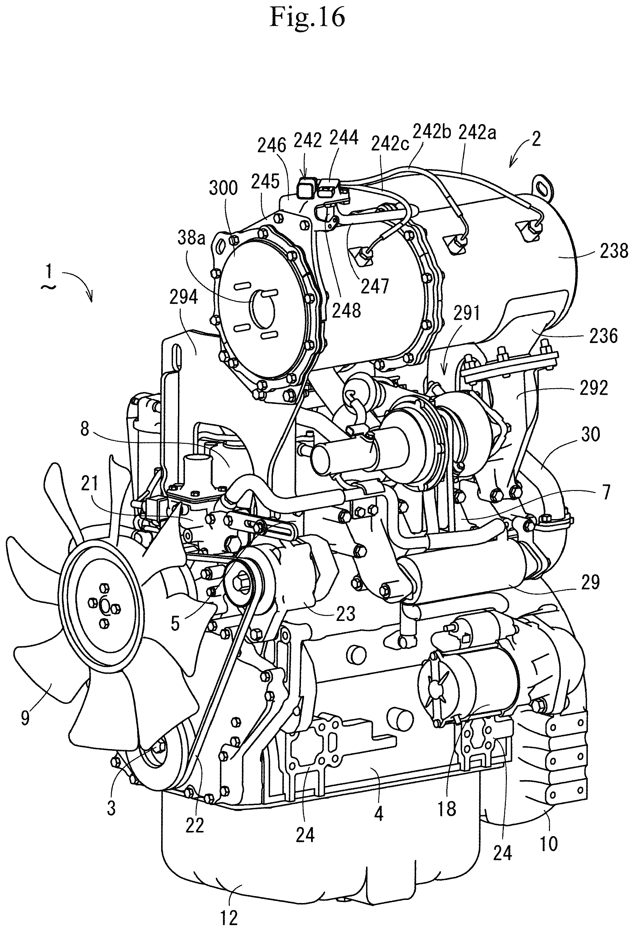

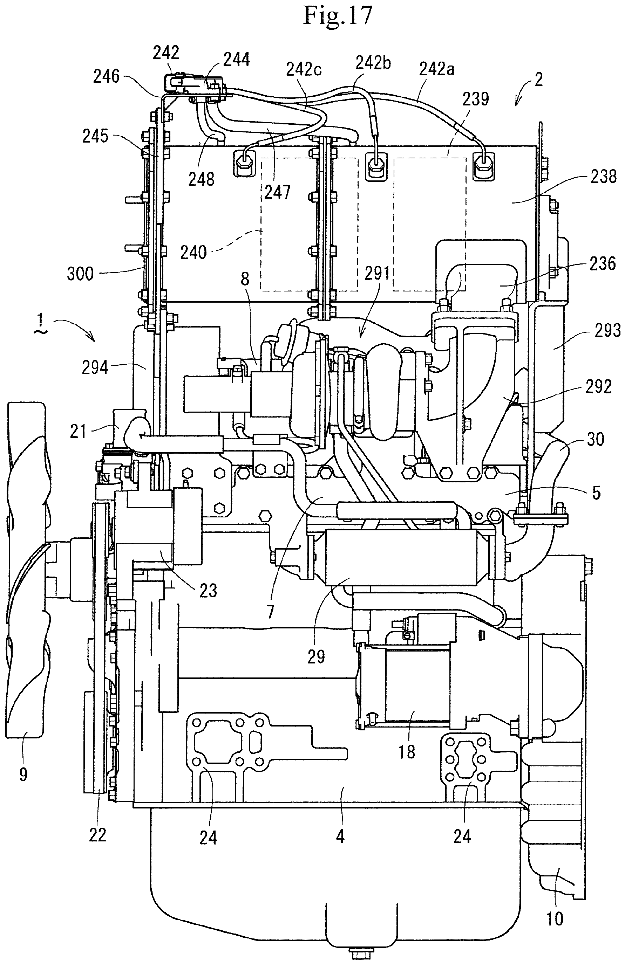

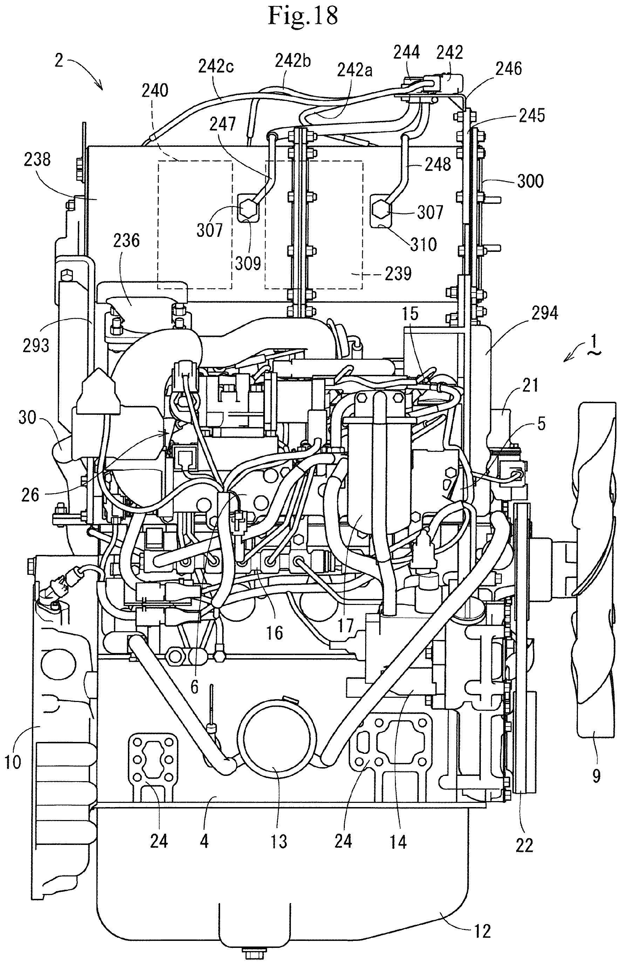

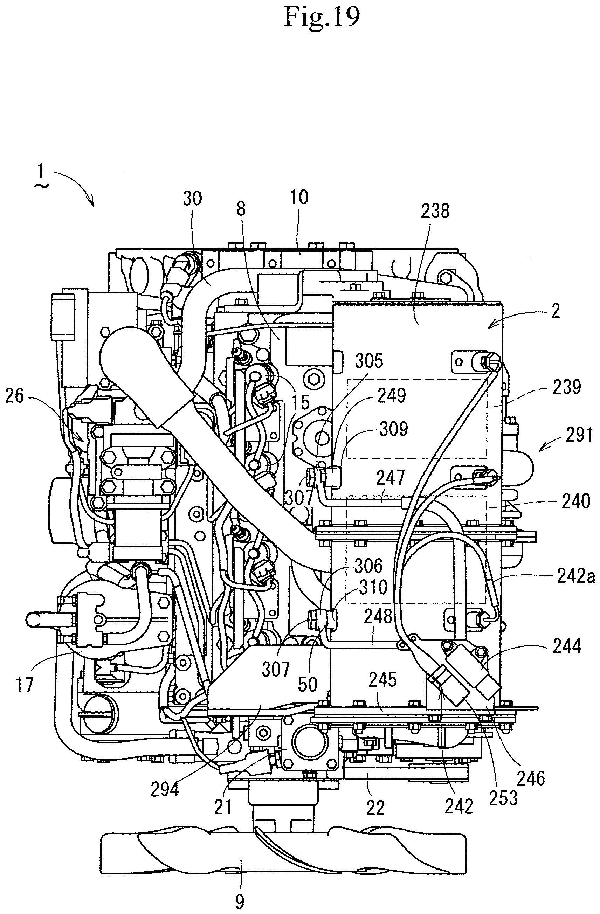

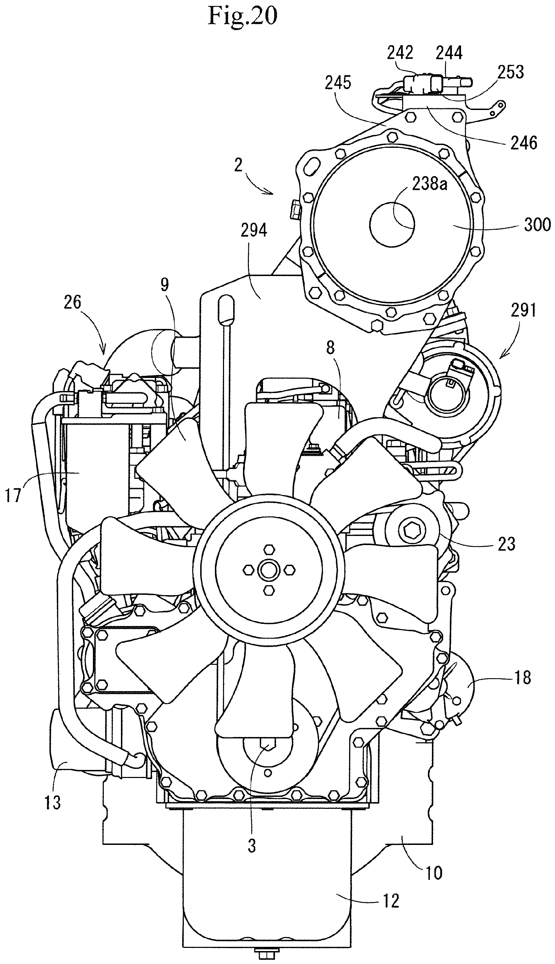

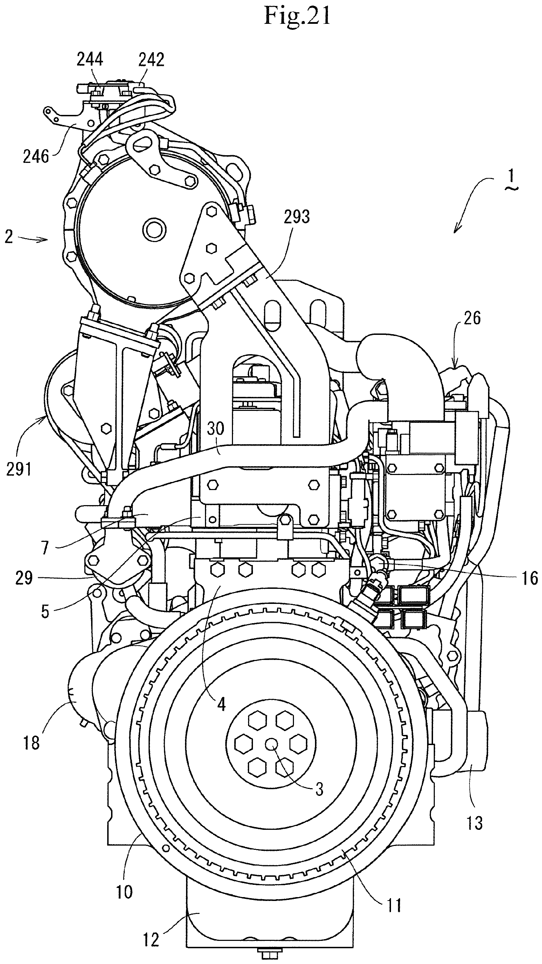

Next, a description will be given of the other example of the mounting aspect of the exhaust gas purification device 2 in the common rail type engine 1, and a structure of the exhaust gas purification device 2 which is used in the other example with reference to Figs. 16 to 21. First of all, a description will be given of the exhaust gas purification device 2. The exhaust gas purification device 2 is provided with a purification casing 238 which has a purification inlet pipe 236. A diesel oxidation catalyst 239 (filter body) and a soot filter 240 (filter body) are arranged in series in an exhaust gas moving direction in an inner portion of the purification casing 238, the diesel oxidation catalyst 239 creating nitrogen dioxide (NO₂) and made of platinum, and the soot filter 240 continuously oxidizing and removing the collected particulate matter (PM) at a comparatively low temperature and having a honeycomb structure. A silencer is connected to an exhaust gas outlet 238a of the purification casing 238 via an exhaust pipe (not shown), and the exhaust gas is discharged out of the machine via the silencer.

According to the structure mentioned above, the nitrogen dioxide (NO₂) generated by an oxidation process of the diesel oxidation catalyst 239 is supplied into the soot filter 240 from one side end surface (an intake side end surface). The particulate matter (PM) included in the exhaust gas of the engine 1 is collected by the soot filter 240, and is continuously oxidized and removed by the nitrogen dioxide (NO₂). In addition to the removal of the particulate matter (PM) in the exhaust gas of the engine 1, the contents of the carbon monoxide (CO) and the hydrocarbon (HC) in the exhaust gas of the engine 1 are reduced.

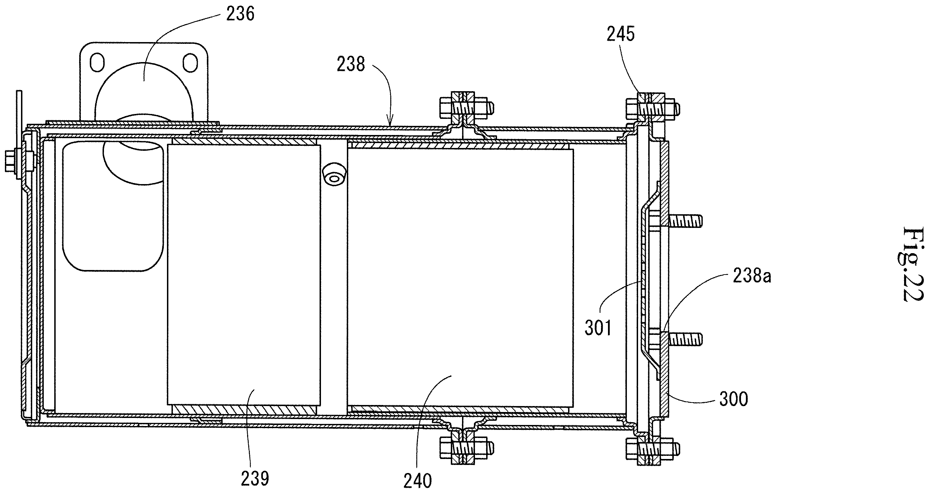

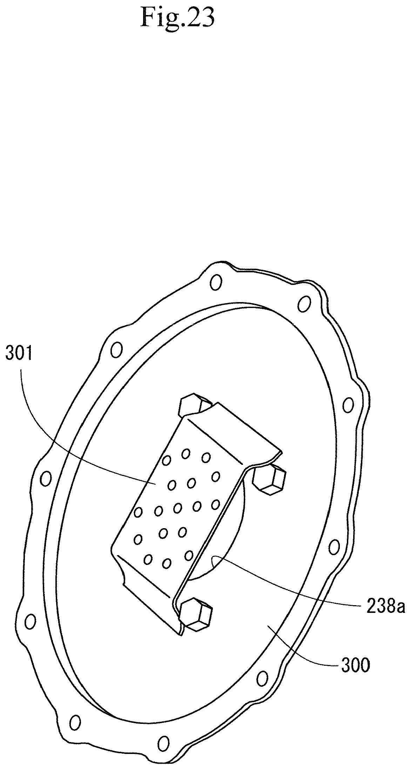

The purification inlet pipe 236 is provided in an outer peripheral portion on an exhaust gas upstream side of the purification casing 238. A lid body 300 is fixed by welding to an end portion on an exhaust gas downstream side of the purification casing 238. The end portion on the exhaust gas downstream side of the purification casing 238 is closed with the lid body 300. An exhaust gas outlet 238a is open to an approximately center portion of the lid body 300. A baffle plate 301 is provided on an inner surface side of the lid body 300, the baffle plate 301 inhibiting the foreign matter from being inserted to an inner portion of the purification casing 238 (refer to Figs. 22 and 23). The baffle plate 301 is constructed as a breathable cover which is made of a punching metal or a metal mesh. A lot of small holes are formed in the baffle plate 301 according to the embodiment. Even if the exhaust pipe (not shown) is detached, the exhaust gas outlet 238a is covered with the baffle plate 301 from its inner side. As a result, the foreign matter can be inhibited from being inserted into the inner portion of the purification casing 238 thanks to the existence of the baffle plate 301. Therefore, it is possible to prevent the soot filter 240 within the purification casing 238 from being broken by inserting the foreign matter such as the rod from the exhaust gas outlet 238, for example, for reducing the pressure loss or for the mischief.

Further, a thermistor type exhaust gas temperature sensor 242 is additionally provided in the purification casing 238. Three sensor pipings 242a to 242c extend from the exhaust gas temperature sensor 242. Detection portions in leading ends of the sensor pipings 242a to 242c respectively protrude into a portion closer to the exhaust gas upstream side than the diesel oxidation catalyst 239, a portion between the diesel oxidation catalyst 239 and the soot filter 240, and a portion closer to the exhaust gas downstream side than the soot filter 240, and detect the exhaust gas temperatures within the respective spaces. The exhaust gas temperature is converted into an electric signal by the exhaust gas temperature sensor 242 and is output to an engine controller (not shown).

Further, an exhaust gas pressure sensor 244 is additionally provided in the purification casing 238. A pressure difference of the exhaust gas between an upstream side and a downstream side of the soot filter 240 is detected by the exhaust gas pressure sensor 244. The pressure difference of the exhaust gas is converted into an electric signal and is output to the engine controller (not shown). An amount of sedimentation of the particulate matter in the soot filter 240 is computed on the basis of the exhaust gas pressure difference between the upstream side and the downstream side of the soot filter 240, whereby a clogged state within the soot filter 240 can be comprehended.

As shown in Figs. 16 to 21, a sensor bracket 246 is fastened by bolts to an outlet pinching flange 245 of the purification casing 238, and the sensor bracket 246 is arranged on an outer surface side of the purification casing 238. The exhaust gas pressure sensor 244 is attached to the sensor bracket 246, the exhaust gas pressure sensor 244 being integrally provided with an electric wiring connector. The exhaust gas pressure sensor 244 is arranged on an outside surface of the purification casing 238. One end side of each of an upstream side sensor pipe 247 and a downstream side sensor pipe 248 is respectively connected to the exhaust gas pressure sensor 244, the upstream side sensor pipe 247 and the downstream side sensor pipe 248 serving as the exhaust gas pressure sensor pipe. Respective sensor piping boss bodies 249 and 250 in an upstream side and a downstream side are arranged in the purification casing 238 as to pinch the soot filter 240 in the purification casing 238. Fastening boss bodies 305 and 306 are fastened to the respective sensor piping boss bodies 249 and 250 via pipe joint bolts 307, the fastening boss bodies 305 and 306 being provided in the other end sides of the respective sensor pipes 247 and 248.

The purification casing 238 according to the embodiment is constructed as a double tube structure (refer to Fig. 22). Each of the sensor piping boss bodies 249 and 250 is fixed by welding to an inner tube side of the purification casing 238 in such a positional relationship as to pinch the soot filter 240. Outward protruding end sides of the sensor piping boss bodies 249 and 250 respectively protrude radially outward from opening holes 309 and 310 which are formed on an outer tube side (an outer peripheral side) of the purification casing 238. Hook-like rotation stop bodies 311 and 312 are provided in the fastening boss bodies 305 and 306 of the respective sensor pipes 247 and 248. When the fastening boss bodies 305 and 306 are fastened to the sensor piping boss bodies 249 and 250 via the pipe joint bolts 307, the fastening boss bodies 305 and 306 are screwed into the sensor piping boss bodies 249 and 250 until the rotation stop bodies 311 and 312 are locked to edge portions of the opening holes 309 and 310 of the purification casing 238. As a result, the fastening boss bodies 305 and 306 are fixed to the sensor piping boss bodies 249 and 250 in the same attitude that each of the sensor pipes 247 and 248 necessarily extend toward the sensor bracket 246 (further toward the exhaust gas pressure sensor 244). Therefore, it is possible to dramatically improve the assembling workability of each of the sensor pipes 247 and 248.

According to the structure mentioned above, it is possible to detect difference between the exhaust gas pressure on the inflow side of the soot filter 240 and the exhaust gas pressure on the outflow side of the soot filter 240 (differential pressure of the exhaust gas) via the exhaust gas pressure sensor 244. Since a residual amount of the particulate matter in the exhaust gas collected by the soot filter 240 is in proportion to the differential pressure of the exhaust gas, there is executed a regeneration control (for example, a control of raising the exhaust gas temperature) for reducing the amount of the particulate matter of the soot filter 240 on the basis of the detection result of the exhaust gas pressure sensor 244, in the case that the amount of the particulate matter remained in the soot filter 240 is increased to a predetermined amount of more. Further, in the case that the residual amount of the particulate matter is further increased to a regeneration controllable range or more, there is carried out a maintenance work of manually removing the particulate matter by detaching and disassembling the purification casing 238 and cleaning the soot filter 240.

An electric wiring connector 253 of the exhaust gas temperature sensor 242 is firmly fixed to the sensor bracket 246. Each of the connectors 253 is supported in such an attitude as to direct each connecting direction of the electric wiring connector of the exhaust gas pressure sensor 244 and the electric wiring connector 253 of the exhaust gas temperature sensor 242 to the same direction.

Next, a description will be given of a structure in which the exhaust gas purification device 2 is additionally provided in the engine 1. The engine 1 serving as a prime mover shown in Figs. 16 to 21 has a structure which is basically the same as that shown in Figs. 1 to 6. A turbo supercharger 291 is provided in the exhaust manifold 7. A housing support body 292 is fastened by bolts to the exhaust manifold 7 and the turbo supercharger 291. It is possible to adjust an attaching position in a back-and-forth direction of the exhaust gas purification device 2 in relation to the housing support body 292 so as to be movable back and forth. The exhaust gas of the engine 1 is supplied to the exhaust gas purification device 2 from the exhaust manifold 7 via a hollow portion of the housing support body 292.

Further, an inlet side bracket body 293 and an outlet side bracket body 294 are provided. An exhaust gas moving direction of the exhaust gas purification device 2 is formed in parallel to an axial line (an output axial line) of the crank shaft 3 of the engine 1. The inlet side bracket body 293 and the outlet side bracket body 294 are formed into a plate shape which is formed wider in a direction intersecting the axial line of the crank shaft 3.

A bifurcated lower end portion of the outlet side bracket body 294 is fastened by bolts to a front surface of the cylinder head 5, and a lower end portion of the inlet side bracket body 293 is fastened by bolts to a rear surface of the cylinder head 5. The outlet side bracket body 294 and the inlet side bracket body 293 stand on two surfaces including the front surface and the rear surface of the cylinder head 5. The exhaust gas inlet side and the exhaust gas outlet side of the gas purification housing 60 are respectively supported to the cylinder head 5 of the engine 1, by the outlet side bracket body 294 and the inlet side bracket body 293.

The present invention is not limited to the embodiment mentioned above, and can be embodied into various aspects. The structure of each of the portions in the present invention is not limited to the illustrated embodiment, and can be variously changed within the range which does not deviate from the scope of the present invention.

### Reference Signs List

- 1: Engine
- 2: DPF (exhaust gas purification device)
- 40: Purification casing
- 41: Purification inlet pipe
- 42: Purification outlet pipe
- 43: Diesel oxidation catalyst
- 44: Soot filter
- 46: Catalyst inside case
- 47: Catalyst outside case
- 48: Filter inside case
- 49: Filter outside case
- 55: Exhaust gas inlet
- 56: Catalyst flange
- 57: Filter inlet flange
- 59, 60: Center pinching flange
- 70: Filter outlet flange
- 71: Silencer flange
- 73, 74: Outlet pinching flange
- 81: Exhaust gas pressure sensor
- 88: Upstream sensor piping
- 89: Downstream sensor piping
- 90: Upstream pipe joint body
- 91: Downstream pipe joint body
- 92: Pressure boss body
- 93: Pipe joint bolt
- 101: Suspension body
- 102: Suspension bracket
- 103, 104: Opening hole
- 121, 122: Opening hole
- 123, 124: Fastening boss body
- 125, 126: Rotation stop body
- 238: Purification casing
- 238a: Exhaust gas outlet
- 239: Diesel oxidation catalyst (filter body)
- 240: Soot filter (filter body)
- 244: Exhaust gas pressure sensor
- 246: Sensor bracket
- 247: Upstream side sensor pipe
- 248: Downstream side sensor pipe
- 249, 250: Sensor piping boss body
- 300: Lid body
- 301: Baffle plate
- 305, 306: Fastening boss body
- 307: Pipe joint bolt
- 309, 310: Opening hole
- 311, 312: Rotation stop body

## Claims

1. An exhaust gas purification device (2) comprising:
a plurality of filter bodies (43, 44) for purifying exhaust gas discharged by an engine (1); and
a purification casing (40, 238) having each of the filter bodies (43, 44) built-in and being constructed by a plurality of purification cases (47, 49, 51),
wherein the purification casing (40, 238) is constructed by arranging the purification cases (47, 49, 51) in an exhaust gas moving direction and connecting the purification cases by a thick plate flange (59, 60, 73, 74), and
a suspension body (101) is integrally formed in the thick plate flange (73), **characterized in that**
an exhaust gas outlet is open to a lid body (53, 54, 300) which closes an exhaust gas downstream side of the purification casing (40, 238), and a baffle plate (301) is provided on an inner surface side of the lid body (53, 54, 300), the baffle plate (301) inhibiting foreign matter from being inserted into an inner portion of the purification casing (40, 238).

2. The exhaust gas purification device according to claim 1, wherein
the suspension body (101) is arranged in one end side in the exhaust gas moving direction of the purification casing (40),
a suspension bracket (102) is arranged in the other end side in the exhaust gas moving direction of the purification casing (40), and wherein
the suspension body (101) and the suspension bracket (102) are spaced in both sides in the exhaust gas moving direction and faced to each other, in such a manner that their opening holes (103, 104) are positioned in a direction intersecting a longitudinal axis of the exhaust gas moving direction of the purification casing (40).

3. The exhaust gas purification device according to claim 2, wherein an attaching phase of the thick plate can be changed around the longitudinal axis of the exhaust gas moving direction of the purification casing.

4. The exhaust gas purification device according to any one of claims 1 to 3, further comprising an exhaust gas pressure sensor (81) for detecting exhaust gas pressure within the purification casing, wherein the exhaust gas pressure sensor is connected to the purification casing (40) via an exhaust gas pressure sensor pipe (88-91), and
wherein a rotation stop body (125, 126) is provided in a fastening boss body (123, 124) which exists in one end side of the exhaust gas pressure sensor pipe (88-91), and the fastening boss body (123, 124) is fastened by locking the rotation stop body (125, 126) to the purification casing.

5. The exhaust gas purification device according to claim 4, wherein each of the purification cases (47, 49, 51) is constructed as a double tube structure by a plurality of inside cases (46, 48, 50) which have each of the filter bodies built-in, and a plurality of outside cases (47, 49, 51) which accommodate the respective inside cases, and wherein a pressure boss body (92) is attached to the inside case, the pressure boss body (92) protrudes outward from an opening hole (121, 122) which is formed in the outside case (47, 49, 51), and the rotation stop body (125, 126) is locked to the opening hole (121, 122) of the outside case (47, 49, 51) in fastening of the fastening boss body (123, 124) of the exhaust gas pressure sensor pipe (88-91) to the pressure boss body (92).

6. The exhaust gas purification device according to claim 5, wherein the purification casing (40) has a purification inlet pipe (41) and a purification outlet pipe (42), and the purification inlet pipe is constructed as a double tube structure.

7. The exhaust gas purification device according to claim 6, wherein the purification outlet pipe (42) passes through the purification casing (40), and an end portion on a closed side of the purification outlet pipe is constructed as a double wall structure.

## Patentansprüche

1. Abgasreinigungsvorrichtung (2), umfassend:
eine Mehrzahl von Filterkörpern (43, 44) zum Reinigen des von einem Motor (1) ausgestoßenen Abgases; und
ein Reinigungsgehäuse (40, 238), in dem jeder Filterkörper (43, 44) eingebaut und durch eine Mehrzahl von Reinigungsbehältern (47, 49, 51) konstruiert ist,
wobei das Reinigungsgehäuse (40, 238) durch Anordnen der Reinigungsbehälter (47, 49, 51) in einer Abgasbewegungsrichtung und durch Verbinden der Reinigungsbehälter durch einen dicken Plattenflansch (59, 60, 73, 74) aufgebaut ist, und
eine Aufhängung (101) ist integral in dem dicken Plattenflansch (73) gebildet,
**dadurch gekennzeichnet, dass**
ein Abgasauslass für einen Deckel (53, 54, 300) offen ist, der ein Abgas flussabwärts des Reinigungsgehäuses (40, 238) verschließt, und eine Umlenkblech (301) an einer inneren Seite des Deckels (53, 54, 300) vorgesehen ist,
das Umlenkblech (301), das das Eindringen von Fremdstoffen in einen inneren Abschnitt des Reinigungsgehäuses (4, 238) verhindert.

2. Abgasreinigungsvorrichtung nach Anspruch 1, wobei die Aufhängung (101) in einer Endseite in der Abgasbewegungsrichtung des Reinigungsgehäuses (40) angeordnet ist,
eine Aufhängelasche (102) in der anderen Endseite in der Abgasbewegungsrichtung des Reinigungsgehäuses (40) angeordnet ist, und wobei
die Aufhängung (101) und die Aufhängelasche (102) beidseitig in der Abgasbewegungsrichtung beabstandet und so zueinander angeordnet, dass ihre Öffnungslöcher (103, 104) in einer Richtung positioniert sind, die eine Längsachse der Abgasbewegungsrichtung des Reinigungsgehäuses (40) kreuzt.

3. Abgasreinigungsvorrichtung nach Anspruch 2, wobei eine Befestigungsphase der dicken Platte um die Längsachse der Abgasbewegungsrichtung des Reinigungsgehäuses herum veränderbar ist.

4. Abgasreinigungsvorrichtung nach einem der Ansprüche 1 bis 3, ferner umfassend einen Abgasdrucksensor (81) zum Detektieren des Abgasdrucks innerhalb des Reinigungsgehäuses, wobei der Abgasdrucksensor mit dem Reinigungsgehäuse (40) über ein Abgasdrucksensorrohr (88-91) verbunden ist, und wobei ein Drehanschlagkörper (125, 126) in einem Befestigungsvorsprung (123, 124) vorgesehen ist, der in einer Endseite des Abgasdrucksensorrohrs (88-91) vorhanden ist und der Befestigungsvorsprung (123, 124) durch Verriegeln des Drehanschlagkörpers (125, 126) an dem Reinigungsgehäuse befestigt ist.

5. Abgasreinigungsvorrichtung nach Anspruch 4, wobei jede der Reinigungsbehälter (47, 49, 51) als eine Doppelrohrstruktur durch eine Vielzahl von Innenbehälter (46, 48, 50) aufgebaut ist, die jeden der eingebauten Filterkörper aufweisen und eine Vielzahl von Außenbehälter (47, 49, 51), die die jeweiligen Innengehäuse aufnehmen, und wobei ein Druckvorsprung (92) an dem Innengehäuse angebracht ist, der Druckvorsprung (92) von einem Öffnungsloch (121, 122) nach außen vorsteht, die in dem Außenbehälter (47, 49, 51) gebildet ist, und der Drehanschlagkörper (125, 126) mit dem Öffnungsloch (121, 122) des Außenbehälters (47, 49, 51) bei der Befestigung des Befestigungsvorsprungs (123, 124) des Abgasdrucksensorrohrs (88-91) an dem Druckvorsprung (92) verriegelt ist.

6. Abgasreinigungsvorrichtung nach Anspruch 5, wobei das Reinigungsgehäuse (40) ein Reinigungseinlassrohr (41) und ein Reinigungsauslassrohr (42) aufweist, und das Reinigungseinlassrohr als Doppelrohrstruktur aufgebaut ist.

7. Abgasreinigungsvorrichtung nach Anspruch 6, wobei das Reinigungsauslassrohr (42) das Reinigungsgehäuse (40) passiert, und ein Endabschnitt auf einer geschlossenen Seite des Reinigungsauslassrohres als Doppelwandstruktur aufgebaut ist.

## Revendications

1. Dispositif de purification de gaz d'échappement (2) comprenant :
plusieurs corps filtrants (43, 44) pour purifier des gaz d'échappement évacués par un moteur (1) ; et
une enceinte de purification (40, 238) dans laquelle sont incorporés chacun des corps filtrants (43, 44) et réalisée sous la forme de plusieurs compartiments de purification (47, 49, 51) ;
dans lequel l'enceinte de purification (40, 238) est réalisée en disposant les compartiments de purification (47, 49, 51) dans une direction de déplacement des gaz d'échappement et en reliant les compartiments de purification par une bride plate épaisse (59, 60, 73, 74) ; et
un corps de suspension (101) fait partie intégrante de la bride plate épaisse (73) sous la forme d'une plaque épaisse ; **caractérisé en ce que**
une sortie de gaz d'échappement est ouverte sur un corps de couvercle (53, 54, 300) qui ferme un côté aval de gaz d'échappement de l'enceinte de purification (40, 238), et une plaque de déviation (301) est prévue sur un côté de surface interne du corps de couvercle (53, 54, 300), la plaque de déviation (301) empêchant des matières étrangères de venir s'insérer dans une portion interne de l'enceinte de purification (40, 238).

2. Dispositif de purification de gaz d'échappement selon la revendication 1, dans lequel :
le corps de suspension (101) est disposé dans un côté terminal dans la direction de déplacement des gaz d'échappement de l'enceinte de purification (40) ;
un support de suspension (102) est disposé dans l'autre côté terminal dans la direction de déplacement des gaz d'échappement de l'enceinte de purification (40) ; et dans lequel
le corps de suspension (101) et le support de suspension (102) sont espacés des deux côtés dans la direction de déplacement des gaz d'échappement et se font mutuellement face, d'une manière telle que leurs trous d'ouverture (103, 104) sont disposés dans une direction coupant un axe longitudinal de la direction de déplacement des gaz d'échappement de l'enceinte de purification (40).

3. Dispositif de purification de gaz d'échappement selon la revendication 2, dans lequel une phase de fixation de la plaque épaisse peut être modifiée autour de l'axe longitudinal de la direction de déplacement des gaz d'échappement de l'enceinte de purification.

4. Dispositif de purification de gaz d'échappement selon l'une quelconque des revendications 1 à 3, comprenant en outre un capteur de pression de gaz d'échappement (81) pour détecter la pression des gaz d'échappement au sein de l'enceinte de purification, dans lequel le capteur de pression de gaz d'échappement est relié à l'enceinte de purification (40) via un conduit de capteur de pression de gaz d'échappement (88-91) ; et
dans lequel un corps d'arrêt de rotation (125, 126) est prévu dans un corps formant protubérance de fixation (123, 124) qui est disposé dans un côté terminal du conduit de capteur de pression de gaz d'échappement (88-91), et le corps formant protubérance de fixation (123, 124) est fixé en verrouillant le corps d'arrêt de rotation (125, 126) à l'enceinte de purification.

5. Dispositif de purification de gaz d'échappement selon la revendication 4, dans lequel chacun des compartiments de purification (47, 49, 51) est réalisé sous la forme d'une double structure tubulaire par plusieurs compartiments internes (46, 48, 50) dans chacun desquels sont incorporés des corps filtrants et par plusieurs compartiments externes (47, 49, 51) dans lesquels viennent se loger les compartiments internes respectifs, et dans lequel un corps formant protubérance de pression (92) est fixé au compartiment interne, le corps formant protubérance de pression (92) fait saillie à l'extérieur d'un trou d'ouverture (121, 122) qui est formé dans le compartiment externe (47, 49, 51), et le corps d'arrêt de rotation (125, 126) est verrouillé au trou d'ouverture (121, 122) du compartiment externe (47, 49, 51) en fixant le corps formant protubérance de fixation (123, 124) du conduit de capteur de pression de gaz d'échappement (88-91) au corps formant protubérance de pression (92).

6. Dispositif de purification de gaz d'échappement selon la revendication 5, dans lequel l'enceinte de purification (40) possède un tuyau d'entrée de purification (41) et un tuyau de sortie de purification (42), et le tuyau d'entrée de purification est réalisé sous la forme d'une double structure tubulaire.

7. Dispositif de purification de gaz d'échappement selon la revendication 6, dans lequel le tuyau de sortie de purification (42) traverse l'enceinte de purification (40), et une portion terminale sur un côté fermé du tuyau de sortie de purification est réalisée sous la forme d'une structure à double paroi.
